# FASCICULE DE BREVET EUROPEEN

(11) **EP 3 831 715 B1**
(45) Date de publication et mention de la délivrance du brevet: **04.01.2023**
(21) Numéro de dépôt: 20206470.5
(22) Date de dépôt: 09.11.2020
(51) Int. Cl.: B64C 27/57, B64D 45/04, B64C 25/32

(54) **PROCEDE ET SYSTEME D'ASSISTANCE AU DECOLLAGE D'UN GIRAVION**
VERFAHREN UND SYSTEM ZUR UNTERSTÜTZUNG DES ABHEBENS EINES DREHFLÜGELFLUGZEUGES
METHOD AND SYSTEM FOR ASSISTING THE TAKE-OFF OF A ROTORCRAFT

(30) Priorité: 04.12.2019 FR 1913736
(43) Date de publication de la demande: 09.06.2021
(73) Titulaire: Airbus Helicopters, 13725 Marignane Cedex (FR)
(72) Inventeur: BELLERA, Jacques, 13100 Aix en Provence (FR); QUEIRAS, Nicolas, 13170 Les Pennes Mirabeau (FR)
(74) Mandataire: GPI Brevets

(56) Documents cités:
- WO-A1-2016/048437
- FR-A1- 2 550 626
- FR-A1- 3 035 978

## Description

La présente invention est du domaine des assistances au pilotage des giravions.

La présente invention concerne un procédé et un système d'assistance au décollage d'un giravion ainsi qu'un giravion équipé d'un tel système.

Un giravion, désigné également « aéronef à voilure tournante », comporte traditionnellement un fuselage et au moins un rotor de sustentation entraîné en rotation par une installation motrice et assurant au moins partiellement la sustentation, voire la propulsion, du giravion. Le giravion peut aussi comporter un dispositif anticouple s'opposant au couple en lacet exercé par le rotor principal sur le fuselage de ce giravion et pour permettre également de contrôler les mouvements en lacet de ce giravion. Un dispositif anticouple est parfois constitué par un rotor auxiliaire situé généralement à l'arrière du giravion, à l'extrémité d'une poutre de queue du giravion et entraîné en rotation par son installation motrice.

Un giravion peut aussi comporter plusieurs rotors de sustentation assurant simultanément et au moins partiellement la sustentation, voire la propulsion, du giravion.

Un giravion peut également comporter une ou plusieurs hélices d'avancement, placées par exemple de part et d'autre du fuselage, et éventuellement sur une aile du giravion. Les hélices sont généralement entraînées en rotation par l'installation motrice du giravion et sont susceptibles d'assurer également la fonction anticouple et de contrôler les mouvements en lacet du giravion.

Un giravion peut être piloté « localement », à savoir par un pilote humain embarqué dans le giravion. Le giravion peut aussi être piloté à distance, à savoir par un pilote se trouvant en dehors du giravion, éventuellement à une distance très éloignée du giravion. Le giravion peut aussi être piloté automatiquement, par exemple via un ordinateur de bord embarqué.

L'atterrissage et le décollage d'un giravion sur un terrain quelconque, et plus particulièrement sur un terrain non préparé ou en pente, constituent des manœuvres délicates. En effet, un équilibre du giravion doit en permanence être trouvé durant ces manœuvres en ajustant l'ensemble des commandes du giravion, en tangage, en roulis et en lacet, au fur et à mesure de la variation du pas des pales de chaque rotor de sustentation du giravion.

Ces manœuvres sont d'autant plus délicates sur un sol en pente car toute commande inappropriée peut faire glisser le giravion dans la pente, voire provoquer son renversement. Ces manœuvres induisent donc des charges de travail accrues pour le pilote du giravion. De plus, des aides au pilotage usuelles fournies dans ce cas par les systèmes d'assistance au pilotage, par exemple un pilote automatique restent limitées, voire inexistantes.

En outre, au début d'un atterrissage, chaque rotor de sustentation est orienté dans une position assez proche de l'horizontale. Au fur et à mesure de l'avancement de la phase d'atterrissage, et notamment lorsque le pas collectif des pales de chaque rotor de sustentation est progressivement baissé, le giravion va commencer à s'incliner dans la pente, chaque rotor de sustentation étant maintenu dans une position toujours sensiblement horizontale afin d'éviter que le giravion ne tombe trop rapidement dans la pente. Cette position de chaque rotor de sustentation ne peut pas être maintenue jusqu'à la fin de l'atterrissage. En effet, cette position induit des efforts et des moments exercés sur le mât du rotor qui peuvent conduire à des endommagements de composants de chaque rotor de sustentation. Ainsi, à la fin de la phase d'atterrissage, lorsque le pas collectif des pales de chaque rotor de sustentation est abaissé vers une position en butée de pas dite « plein petit pas », chaque rotor de sustentation est repositionné manuellement par le pilote vers une position centrée. Le plan moyen ainsi formé par les pales de chaque rotor de sustentation se retrouve alors perpendiculaire au mât rotor du giravion, c'est à dire dans une position sensiblement parallèle à la pente.

La phase de décollage sur un sol en pente implique quant à elle de gérer deux aspects distincts mais qui peuvent se combiner pour complexifier cette manœuvre. En effet, il est nécessaire d'une part de commander chaque rotor de sustentation pour effectuer un décollage vertical et d'autre part d'éviter de glisser dans la pente durant cette phase. Avant d'effectuer la manœuvre de décollage, le réglage des pas des pales de chaque rotor de sustentation doit être adapté car une position de chaque rotor de sustentation parallèle à la pente n'est pas appropriée pour réaliser un décollage purement vertical sur pente. Dès lors, tout en montant progressivement le pas collectif des pales de chaque rotor de sustentation, le pilote doit trouver un équilibre du giravion pour décoller en ajustant la commande de pas cyclique des pales de chaque rotor de sustentation et la commande de pas des pales d'un rotor auxiliaire de contrôle de mouvement en lacet le cas échéant, en fonction du comportement du giravion ressenti par le pilote, par exemple en fonction des accélérations et/ou des vitesses angulaires du giravion, ou encore d'indications visuelles extérieures, telles que les mouvements du giravion par rapport au sol ou bien les variations des positions du plan d'un disque rotor.

Le positionnement de chaque rotor de sustentation s'avère d'autant plus délicat en l'absence de ressenti selon le type de commandes utilisées dans le giravion, le pilote pouvant ne pas avoir de restitution de la position et/ou des efforts de chaque rotor de sustentation à travers le manche de commande de pas collectif, par exemple avec des commandes de vol électrique, connues sous l'acronyme « *CDVE* », associées à un mini-manche, dans le cas d'un pilotage à distance ou encore lorsque la phase de décollage s'effectue de manière automatisée. De plus, le positionnement de chaque rotor de sustentation est aussi délicat à établir car il dépend de nombreux facteurs tels que l'inclinaison de la pente, la force et la direction du vent, la masse et le centrage du giravion par exemple.

Les systèmes usuels d'aides au pilotage d'un giravion associés par exemple à un pilote automatique ou à un système de commandes de vol électriques *CDVE* ne peuvent fournir la plupart du temps aucune aide afin de positionner un rotor de sustentation pour la phase de décollage sur pente, compte tenu des nombreux cas opérationnels possibles, et/ou de l'utilisation de systèmes de détection souvent limités afin de déterminer si le giravion est en vol ou bien au sol.

On connait toutefois le document WO 2016/048437 qui décrit une méthode de compensation, avant décollage, de la position d'un rotor de sustentation d'un giravion en fonction de son assiette, et donc de l'inclinaison du sol sur lequel repose le giravion. De la sorte, cette méthode permet de définir une trajectoire de décollage en prenant en compte la pente éventuelle du sol. Cette méthode de compensation peut aussi prendre en compte la vitesse et la direction du vent et/ou la masse du giravion.

L'arrière plan technologique de l'invention comporte également les documents FR 3035978 et FR 2550626.

La présente invention a alors pour objet de proposer une méthode et un système d'assistance au décollage applicable aussi bien sur un sol plat et horizontal que sur une pente d'un giravion visant à s'affranchir des limitations mentionnées ci-dessus, en positionnant, dès l'engagement de la phase de décollage, chaque rotor du giravion à une position optimisée et robuste aux différentes conditions opérationnelles réelles, principalement vis-à-vis de l'inclinaison du sol sur laquelle est posé le giravion, vis-à-vis du vent en amplitude et en direction et vis-à-vis de la masse et du centrage du giravion. La présente invention vise ainsi à faciliter et à sécuriser la manœuvre de décollage pour le pilote du giravion.

Un objet selon la présente invention est un procédé d'assistance au décollage d'un giravion, le giravion comportant :
- un fuselage,
- au moins un rotor muni d'une pluralité de pales, dont au moins un rotor de sustentation,
- des dispositifs de commande des pas des pales dudit au moins un rotor, et
- un train d'atterrissage muni d'au moins trois organes de contact au sol, chacun étant relié audit fuselage par un organe de liaison.

Le giravion peut par exemple comporter un rotor principal de sustentation et éventuellement un rotor auxiliaire de contrôle de mouvement en lacet. Le giravion peut aussi comporter un rotor principal de sustentation et au moins une hélice d'avancement ayant également une fonction de contrôle de mouvement en lacet. Le giravion peut également comporter plusieurs rotors de sustentation et éventuellement une ou plusieurs hélices d'avancement.

Le giravion peut être piloté par un pilote humain embarqué ou bien à distance. Le giravion peut aussi être piloté automatiquement.

Le giravion comporte également un calculateur afin de mettre en œuvre le procédé d'assistance au décollage d'un giravion. Ce calculateur peut être par exemple intégré à un système avionique du giravion ou bien être dédié à la mise en œuvre du procédé selon l'invention.

Le calculateur peut comporter au moins un processeur et au moins une mémoire, au moins un circuit intégré, au moins un système programmable ou bien au moins un circuit logique, ces exemples ne limitant pas la portée donnée à l'expression « calculateur ». Le calculateur peut être un calculateur dédié à la réalisation du procédé selon l'invention ou être un calculateur partagé ayant de multiples fonctions.

Le procédé d'assistance au décollage selon l'invention comporte les étapes suivantes :
- mesure d'au moins une information relative aux efforts subis par chaque organe de contact au sol pendant une phase d'atterrissage,
- mesure d'au moins une information relative aux pas des pales de chaque rotor pendant la phase d'atterrissage du giravion, et
- commande automatique des pas des pales de chaque rotor pendant une phase de décollage du giravion faisant suite à l'atterrissage en fonction des mesures effectuées lors dudit atterrissage.

Le procédé d'assistance au décollage selon l'invention est particulièrement adapté à une phase d'atterrissage et de décollage sur un sol en pente mais peut bien entendu être également appliqué à une phase d'atterrissage et de décollage sur un sol plat et horizontal.

Le procédé selon l'invention permet ainsi tout d'abord d'identifier les réglages des pas des pales de chaque rotor du giravion utilisés lors de la phase d'atterrissage, sur un sol en pente ou un sol plat, notamment à un moment opportun d'un contact du giravion avec le sol puis de positionner avantageusement chaque rotor, selon ces réglages dès le démarrage de la phase de décollage.

Le giravion peut comporter au moins un rotor de sustentation dont le pas des pales est variable collectivement et cycliquement. Ladite au moins une information relative aux pas des pales de chaque rotor mesurée pendant la phase d'atterrissage du giravion comporte alors le pas collectif et le pas cyclique des pales de chaque rotor de sustentation.

Le giravion peut également comporter au moins un rotor auxiliaire pilotant notamment les mouvements du giravion autour de l'axe de lacet et dont le pas des pales est variable uniquement collectivement. Ladite au moins une information relative aux pas des pales de chaque rotor mesurée pendant la phase d'atterrissage du giravion comporte alors le pas collectif des pales de chaque rotor auxiliaire.

Lors de la phase de décollage, le pilote garde de préférence la maîtrise de réglage du pas collectif des pales de chaque rotor de sustentation et commande de fait la variation de ce pas collectif des pales de chaque rotor de sustentation, le procédé commandant avantageusement automatiquement, lors de l'étape de commande automatique des pas des pales de chaque rotor, le pas cyclique des pales de chaque rotor de sustentation, pilotant les mouvements du giravion autour des axes de tangage et de roulis du giravion, voire autour de l'axe de lacet, ainsi que le pas des pales d'au moins un rotor auxiliaire éventuel pilotant les mouvements du giravion autour de l'axe de lacet.

En effet, dans le cas particulier des atterrissages sur pente, le giravion se positionne d'abord en vol stationnaire avant de réaliser un atterrissage sensiblement vertical et devra redécoller dans la même configuration en tenant compte de l'effet de la pente. Cette hypothèse s'appuie sur le fait qu'il existe peu de conditions opérationnelles usuelles où le giravion effectue un roulage sur pente et change éventuellement de cap.

Les informations des pas des pales de chaque rotor du giravion, par exemple un rotor principal de sustentation et un rotor auxiliaire de contrôle de mouvement en lacet, obtenues pendant la phase d'atterrissage peuvent donc être utilisées pendant la phase de décollage pour effectuer un décollage sensiblement vertical.

Ces informations des pas des pales de chaque rotor du giravion obtenues pendant la phase d'atterrissage ont l'avantage d'être intrinsèquement robustes à l'inclinaison de la pente et aux conditions de vent en direction et en vitesse. En effet, la très grande majorité des atterrissages et des décollages sur pente, notamment les pentes importantes, se font dans un laps de temps réduits, rotors tournants. Dans ces conditions, il est légitime de considérer que le décollage s'effectue dans des conditions atmosphériques, à savoir de vent, de pression atmosphérique et de température, sensiblement similaires à celles de l'atterrissage.

De même, les informations des pas des pales de chaque rotor du giravion obtenues pendant la phase d'atterrissage sur un sol sensiblement plat et horizontal sont également intrinsèquement robustes vis à vis des conditions atmosphériques sensiblement similaires à celles de l'atterrissage pour un décollage effectué peu de temps après cet atterrissage et pour un même cap.

Cependant dans le cas où le giravion évoluerait au sol après avoir atterri sur un sol sensiblement plat et horizontal, il est préférable de ne pas mémoriser les informations des pas des pales de chaque rotor du giravion obtenues pendant la phase d'atterrissage, mais d'utiliser plutôt pour la phase de décollage des informations des pas des pales de chaque rotor du giravion correspondant à celles obtenues en vol stationnaire sans vent, avec un centrage neutre, et une masse moyenne.

De la sorte, chaque rotor est positionné automatiquement, dès le démarrage de la phase de décollage, à une position optimisée vis-à-vis de la pente du sol sur lequel se trouve le giravion. En conséquence, le décollage est facilité pour le pilote afin d'être réalisé de façon équilibrée et sensiblement verticale, quelle que soit l'inclinaison du sol où se trouve le giravion et sans que le pilote n'ait à rechercher cet équilibre.

« Positionner un rotor » signifie plus précisément positionner un « disque rotor », formé par la trajectoire des extrémités libres des pales lors de la rotation du rotor, dans une position recherchée, ce disque rotor se déplaçant, voire s'inclinant, en fonction de la variation des pas des pales de ce rotor. En effet, une variation des pas collectifs des pales d'un rotor provoque une translation du disque rotor, ce disque rotor conservant la même inclinaison par rapport à une référence, par exemple une direction horizontale du giravion. Une variation des pas cycliques des pales d'un rotor provoque quant à elle une inclinaison du disque rotor par rapport à cette direction horizontale du giravion.

Par ailleurs, le giravion peut également comporter au moins trois rotors de sustentation dont le pas des pales est variable uniquement collectivement, leur pas cyclique étant fixe, ce giravion pouvant être nommé « giravion multirotor ». Le pilotage des mouvements du giravion est alors effectué par des commandes différentes que celles d'un hélicoptère, comme par exemple des variations différentielles des pas collectif des pales des rotors de sustentation et/ou des vitesses de rotation des rotors de sustentation, voire l'orientation de gouvernes agencées dans le flux d'air balayant au moins un rotor de sustentation. Cependant, le principe de commande de la présente invention reste applicable en raisonnant au niveau des quatre axes de commandes du giravion tels que le tangage, le roulis, le lacet et la sustentation.

Dans ce cas, ladite au moins une information relative aux pas des pales de chaque rotor mesurée pendant la phase d'atterrissage du giravion comporte le pas collectif des pales de chaque rotor de sustentation et/ou la vitesse de rotation de chaque rotor de sustentation et/ou l'orientation de gouvernes agencées dans le flux d'air balayant au moins un rotor de sustentation. Pendant la commande automatique des pas des pales de chaque rotor de sustentation, le pas collectif des pales de chaque rotor de sustentation et/ou la vitesse de rotation de chaque rotor de sustentation et/ou l'orientation de ces gouvernes peuvent être pilotés automatiquement en parallèle d'une commande d'un pilote humain ou automatique du giravion multirotor visant à modifier de façon identique le pas collectif des pales de chaque rotor de sustentation et/ou la vitesse de rotation de chaque rotor de sustentation.

La présente invention est optimisée quel que soit le type du train d'atterrissage du giravion, par exemple à roues, à skis ou à patins.

Par exemple, dans le cas d'un train d'atterrissage à roues, le train d'atterrissage peut comporter au moins trois atterrisseurs à roue, chaque atterrisseur étant muni d'un organe de contact au sol comportant au moins une roue et au moins un organe de liaison reliant cette au moins une roue au fuselage du giravion. De fait, le train d'atterrissage comporte ainsi au moins trois organes de contact au sol comportant chacun au moins une roue.

De même, dans le cas d'un train d'atterrissage à skis, le train d'atterrissage peut comporter trois atterrisseurs à ski, chaque atterrisseur étant muni d'un organe de contact au sol comportant au moins un ski et au moins un organe de liaison reliant au moins un ski au fuselage du giravion. De fait, le train d'atterrissage comporte au moins trois organes de contact au sol comportant chacun au moins un ski.

Dans le cas d'un train d'atterrissage à patins, le train d'atterrissage peut comporter deux atterrisseurs munis chacun d'un patin, chaque atterrisseur étant muni de deux organes de contact au sol comportant une partie d'un patin et un organe de liaison reliant le patin au fuselage du giravion. De fait, lorsque le train d'atterrissage comporte deux atterrisseurs à patins, le train d'atterrissage comporte quatre organes de contact au sol. Deux organes de liaison reliant chacun un patin au fuselage peuvent par exemple être formés par un unique composant, telle une traverse fixée au fuselage et aux deux patins.

Le procédé d'assistance au décollage selon l'invention peut de plus comprendre une ou plusieurs des caractéristiques qui suivent, prises seules ou en combinaison.

Selon un aspect, l'étape de mesure d'au moins une information relative aux pas des pales de chaque rotor peut comporter une mesure des positions d'au moins un dispositif de commande de pas des pales de chaque rotor du giravion, par exemple par l'intermédiaire d'un capteur positionné sur chaque dispositif de commande de pas. Par exemple, une mesure de la position d'un levier de commande du pas cyclique des pales d'un rotor principal de sustentation peu être réalisée, la position du levier de commande du pas cyclique correspondant aux commandes autour des axes de tangage et de roulis du giravion. Une mesure de la position d'un palonnier de commande du pas collectif des pales d'un rotor auxiliaire peut aussi être réalisée, cette position du palonnier correspondant à une commande autour de l'axe de lacet du giravion. Une mesure de la position d'un manche de commande du pas collectif des pales de ce rotor principal de sustentation peut éventuellement être également mémorisée.

L'étape de mesure d'au moins une information relative aux pas des pales de chaque rotor peut aussi comporter une mesure directe des pas des pales de chaque rotor au niveau de chaque rotor, par exemple par l'intermédiaire d'un capteur positionné au niveau d'un plateau tournant de chaque rotor, au niveau de chaque servocommande commandant le pas des pales de chaque rotor ou bien au niveau d'au moins une pale de chaque rotor.

Cette mesure d'au moins une information relative aux pas des pales de chaque rotor est effectuée pendant la phase d'atterrissage et notamment lors d'un contact du giravion avec le sol et/ou lors d'une augmentation des forces de réaction du sol sur le giravion. En effet, dans le cas particulier d'un atterrissage sur un sol en pente, le giravion se positionne d'abord en vol stationnaire au dessus du sol avant de réaliser un atterrissage sensiblement vertical. De fait et contrairement à un atterrissage sur un sol sensiblement horizontal, les différents organes de contact au sol du train d'atterrissage entrent en contact avec le sol de façon désynchronisée. Par exemple, pour un giravion muni d'un train d'atterrissage comportant trois atterrisseurs à roue, un premier atterrisseur entre en contact avec le sol, puis, le giravion continuant sa descente, les deux autres atterrisseurs peuvent entrer en contact avec le sol simultanément ou bien l'un après l'autre.

L'étape de mesure d'au moins une information relative aux efforts subis par chaque organe de contact au sol du train d'atterrissage permet de détecter d'une part l'entrée en contact d'un organe de contact au sol avec le sol plat ou en pente ainsi qu'une augmentation d'une force de réaction du sol sur cet organe de contact au sol.

Selon un autre aspect, l'étape de mesure d'au moins une information relative aux efforts exercés sur chaque organe de contact au sol du train d'atterrissage pendant la phase d'atterrissage peut comporter une mesure directe d'un effort subi par chaque organe de contact au sol par l'intermédiaire d'un capteur agencé dans ou sur cet organe de contact au sol.

L'étape de mesure d'au moins une information relative aux efforts exercés sur chaque organe de contact au sol du train d'atterrissage pendant la phase d'atterrissage peut aussi comporter une mesure d'un enfoncement ou d'une déformation de chaque organe de contact au sol. Ensuite, le calculateur utilise une table de corrélation reliant d'une part l'effort subi par l'organe de contact au sol et d'autre part l'enfoncement ou la déformation mesurée de chaque organe de contact au sol afin d'en déduire l'effort subi par l'organe de contact au sol. Cette table de corrélation peut être déterminée préalablement et est spécifique à chaque giravion et fonction également de la charge utile embarquée. Cette table de corrélation est par exemple stockée dans une mémoire du calculateur ou bien reliée au calculateur.

Par exemple, le déplacement ou la déformation d'un composant ou d'une zone de l'organe de contact au sol est mesuré par l'intermédiaire d'un capteur agencé dans cet organe de contact au sol.

Le document FR 2986322 décrit un dispositif de mesure comportant un capteur agencé dans un organe de contact au sol d'un atterrisseur et mesurant la déformation d'une zone de cet organe de contact au sol. Un effort subi par l'organe de contact au sol est associé à chaque valeur mesurée de la déformation de cet organe de contact au sol. De la sorte, ce dispositif permet d'obtenir des valeurs progressives et continues des efforts et des contraintes subies par l'atterrisseur, et de fait les contraintes qu'exerce le sol sur le giravion via chaque organe de contact au sol au moment de l'atterrissage ou du décollage.

Selon un autre aspect, le procédé peut comporter une étape de mémorisation de ladite au moins une information relative aux pas des pales de chaque rotor mesurée et éventuellement également de ladite au moins une information relative aux efforts subis par chaque organe de contact au sol du train d'atterrissage mesurée. Cette mémorisation est effectuée dans une mémoire du calculateur ou bien dans une mémoire indépendante reliée au calculateur. En outre, dans le cas où une information relative aux efforts subis par chaque organe de contact au sol est un enfoncement ou une déformation, l'effort correspondant à cette information peut aussi être mémorisé.

Ces informations combinées relatives à des valeurs de pas des pales de chaque rotor et d'efforts subis par chaque organe de contact au sol peuvent alors permettre de reconstituer le comportement du giravion, lors des phases d'atterrissage sur un sol plat ou en pente, notamment les conditions d'équilibre de chaque rotor et du giravion dans son ensemble.

Le procédé selon l'invention permet avantageusement, lors de l'étape de commande automatique des pas des pales d'au moins un rotor, de restituer pendant la phase de décollage les mesures de ladite au moins une information relative aux pas des pales de chaque rotor effectuées pendant la phase d'atterrissage afin de positionner automatiquement chaque rotor du giravion par rapport à l'inclinaison du sol de sorte à obtenir les conditions d'équilibre de chaque rotor et du giravion dans son ensemble. Le pilote n'a alors pas à chercher ces conditions d'équilibre ce qui permet de faciliter la manœuvre de décollage et de diminuer drastiquement la charge de travail du pilote.

Ces positions de commande du pas des pales de chaque rotor obtenues pendant la phase d'atterrissage présentent l'avantage d'être intrinsèquement robustes au moins vis-à-vis de l'inclinaison du sol sur lequel repose le giravion, voire vis-à-vis des conditions de vent. En effet, un giravion stationne généralement peu de temps sur un sol en pente, notamment pour les pentes importantes, et le décollage suit de près l'atterrissage, voire sans arrêter la rotation des rotors. Dès lors, les conditions rencontrées lors du décollage sur un sol en pente, notamment les conditions de vent, à savoir la direction et la vitesse du vent, ainsi que la température et la pression atmosphérique, sont très proches, voire similaires, des conditions subis lors de l'atterrissage. En conséquence, il est légitime de considérer que le décollage du giravion s'effectue dans des conditions similaires à celles de l'atterrissage, le positionnement de chaque rotor sur la base de réglages identiques à l'atterrissage permettant un décollage sécurisé du giravion.

Cette étape de commande automatique des pas des pales de chaque rotor est effectuée par l'intermédiaire du calculateur fournissant par exemple des consignes de pas correspondant aux mesures de ladite au moins une information relative aux pas des pales d'au moins un rotor effectuées durant la phase d'atterrissage. Le calculateur émet par exemple des signaux numériques ou analogiques, sous forme électrique ou optique, porteurs de ces consignes à destination d'un pilote automatique du giravion ou bien directement de commandes de vol électriques associées respectivement à chaque rotor.

Le procédé selon l'invention permet ainsi d'une part d'assurer un bon positionnement de chaque rotor pour effectuer un décollage vertical à partir d'un sol en pente et d'autre part d'éviter de glisser dans cette pente durant la phase de décollage. En effet, sans ce procédé, le pilote du giravion doit, avant d'effectuer le décollage proprement dit, piloter chaque rotor afin de trouver un équilibre permettant un décollage sensiblement vertical.

Selon un aspect, l'étape de commande automatique des pas des pales de chaque rotor durant une phase de décollage du giravion peut être réalisée dès la détection de l'engagement de la phase de décollage du giravion afin de positionner au plus tôt et de façon automatique les pales de chaque rotor selon les mesures effectuées pendant la phase d'atterrissage.

L'engagement de la phase de décollage peut être détecté dès la réalisation d'une action visant à augmenter ou augmentant le pas collectif des pales de chaque rotor de sustentation. Par exemple, dès le pilote du giravion agit sur le manche de commande du pas collectif des pales d'un rotor principal de sustentation, l'engagement de la phase de décollage peut être détecté et l'étape de commande automatique des pas des pales de chaque rotor pour une phase de décollage du giravion est réalisée.

L'engagement de la phase de décollage peut aussi être détecté dès qu'une information relative au pas collectif des pales d'au moins un rotor de sustentation est supérieure à un seuil de décollage. Une telle information peut être obtenue par l'intermédiaire d'au moins un capteur utilisé également pour l'étape de mesure d'au moins une information relative aux pas des pales de chaque rotor pendant la phase d'atterrissage du giravion. Par exemple, le seuil de décollage est égal à 20% de l'amplitude de variation du pas collectif des pales de ce rotor de sustentation.

De la sorte, un seuil de décollage peut être comparé à une valeur de pas ou à une position d'un dispositif de commande de pas.

Selon un aspect, l'étape de mesure de ladite au moins une information relative aux pas des pales de chaque rotor peut être effectuée en continue pendant la phase d'atterrissage et parallèlement aux mesures de ladite au moins une information relative aux efforts subis par chaque organe de contact au sol, chaque mesure de ladite information relative aux pas des pales de chaque rotor étant associée à des mesures de ladite au moins une information relative aux efforts subis par chaque organe de contact au sol.

Cette étape de mesure peut également être effectuée par un échantillonnage des mesures à intervalles réguliers selon les techniques usuelles.

Dans ces deux cas, l'étape de mémorisation mémorise des mesures successives de ladite au moins une information relative aux pas des pales de chaque rotor effectuées durant la phase d'atterrissage.

Selon un autre aspect, l'étape de mesure de ladite au moins une information relative aux pas des pales de chaque rotor peut être effectuée à un moment opportun de la phase d'atterrissage correspondant à une phase de contact particulier du giravion avec le sol. Dans ce cas, l'étape de mémorisation mémorise les mesures de ladite au moins une information relative aux pas des pales des rotors effectuées à ce moment opportun de la phase d'atterrissage.

Par exemple, une phase de contact particulier du giravion avec le sol est atteinte quand un seul organe de contact au sol est en contact avec le sol et une augmentation significative d'un effort sur cet organe de contact au sol en contact avec le sol est détectée.

Une telle phase de contact particulier du giravion avec le sol peut être considérée comme atteinte lorsqu'une information relative aux efforts subis par un organe de contact au sol est supérieure à un seuil d'enfoncement et des informations relatives aux efforts subis par les autres organes de contact au sol sont inférieures à un seuil de non contact, le seuil de non contact étant inférieur au seuil d'enfoncement.

Une phase de contact particulier du giravion avec le sol peut également être atteinte quand un contact avec le sol de deux organes de contact au sol est détecté. Une telle phase de contact particulier du giravion avec le sol peut être considérée comme atteinte lorsque des informations relatives aux efforts subis par deux organes de contact au sol sont supérieures à un seuil de contact et chaque information relative aux efforts subis par chacun des autres organes de contact au sol est inférieure à un seuil de non contact, le seuil de non contact étant inférieur au seuil de contact.

Les seuils d'enfoncement, de contact et de non contact sont fonction de la masse du giravion, de la répartition de cette masse et du type de train d'atterrissage, à savoir à roues, à skis ou à patins. Le seuil d'enfoncement peut aussi être différent pour les atterrisseurs d'un même train d'atterrissage.

Les seuils d'enfoncement, de contact et de non contact peuvent correspondre par exemple à des efforts lorsque ladite au moins une information relative aux efforts subis par chacun des autres organes de contact au sol est directement un effort ou permet de déduire un effort. Les seuils d'enfoncement, de contact et de non contact peuvent aussi être des valeurs de distance lorsque ladite au moins une information relative aux efforts subis par chacun des autres organes de contact au sol est un enfoncement ou une déformation.

Pour un giravion comportant un train d'atterrissage muni de trois atterrisseurs à roue, le seuil d'enfoncement est par exemple égal à 25000 Newton pour un atterrisseur principal à roue agencé à l'arrière du giravion et 15000 Newton pour un atterrisseur auxiliaire à roue agencé à l'avant du giravion. Le seuil de contact est par exemple égal à 2500 Newton et le seuil de non contact est par exemple égal à 1000 Newton quel que soit l'atterrisseur à roue.

Selon un autre aspect, lorsque l'étape de mesure de ladite au moins une information relative aux pas des pales de chaque rotor est effectuée en continue ou de façon échantillonnée pendant la phase d'atterrissage, le calculateur peut déterminer a posteriori, à partir des mesures de ladite au moins une information relative aux efforts subis par chaque organe de contact au sol du train d'atterrissage, le moment opportun de la phase d'atterrissage correspondant à une phase de contact particulier du giravion avec le sol telle que précédemment décrite. Dès lors, l'étape de commande du pas des pales des rotors pour une phase de décollage du giravion utilise les mesures de l'information relative aux pas des pales des rotors associées à ce moment opportun de la phase d'atterrissage.

Selon un autre aspect, pendant la phase d'atterrissage, une loi d'aide au pilotage de stabilisation automatique d'aide au pilotage du giravion peut être utilisée. Cette loi d'aide au pilotage de stabilisation automatique peut agir sur le pas des pales de chaque rotor du giravion en complément des commandes d'un pilote. Les commandes de cette loi d'aide au pilotage de stabilisation automatique sont composées principalement d'une partie « dynamique » et d'une partie « statique ». Dans ce cas, seule la partie « statique » de l'information relative aux pas des pales des rotors est mémorisée, la partie « dynamique » correspondant à la contribution de la loi d'aide au pilotage de stabilisation automatique sur les pas des pales de chaque rotor n'étant pas prise en compte.

Si l'information relative aux pas des pales des rotors est une mesure des positions d'au moins un dispositif de commande de pas des pales de chaque rotor du giravion, cette partie « dynamique » liée à la contribution de la stabilisation automatique n'est pas prise en compte.

Si l'information relative aux pas des pales des rotors est une mesure directe des pas des pales au niveau de chaque rotor, cette partie « dynamique » est retranchée de cette mesure pour chaque rotor. En outre, dans le cas d'un pilotage automatique des pas des pales des rotors, l'information relative aux pas des pales des rotors peut aussi être égale à la consigne totale du pilote automatique retranchée de la partie « dynamique » liée à la contribution de la stabilisation du pilote automatique.

Selon un autre aspect, lorsque le pilote baisse le manche de commande du pas collectif de chaque rotor principal de sustentation vers la position dite « plein petit pas » afin de terminer la phase d'atterrissage, une phase de recentrage des pas des pales de chaque rotor est réalisée dès que l'information relatif au pas collectif de ces pales de chaque rotor de sustentation est inférieure à un seuil de recentrage et que l'ensemble des trains d'atterrissage du giravion sont suffisamment chargés, par exemple lorsque l'information relative aux efforts subis par chaque organe de contact au sol est supérieure à un seuil d'atterrissage effectif représentant que le giravion est au sol.

Le seuil de recentrage est par exemple égal à une valeur de 30% de l'amplitude de variation du pas collectif des pales de chaque rotor de sustentation et le seuil d'atterrissage effectif est par exemple égal à 40000 Newton. Cette phase de recentrage des pas des pales de chaque rotor permet de positionner chaque rotor de sustentation perpendiculairement au mât respectif de chaque rotor et le rotor auxiliaire éventuel autour d'une position centrée. Une telle position centrée de chaque rotor est habituellement appelé par l'homme du métier la position « zéro pitch ». Cette phase de recentrage des pas des pales des rotors est applicable que le giravion atterrisse sur un sol plat et horizontal ou sur une pente.

En outre, afin de s'adapter aux différentes dynamiques possibles de décollage réalisées par un pilote par l'intermédiaire du manche de commande de pas collectif, une dynamique calibrée de rejointe des positions de pas des pales correspondant aux informations relatives aux pas des pales de chaque rotor mémorisées est adaptée en fonction de la dynamique de commande observée sur le manche de commande de pas collectif de sorte à rejoindre ces positions de pas des pales de façon adéquate et cohérente avec cette dynamique de commande observée sur le manche de commande de pas collectif.

Selon un autre aspect, afin d'être robuste aux sollicitations du pilote sur le manche de commande du pas collectif pendant l'atterrissage, les informations relatives aux pas des pales de chaque rotor mesurées pendant la phase d'atterrissage du giravion sont mémorisées jusqu'à ce qu'un nouveau décollage du giravion soit détecté, par exemple jusqu'à ce que les informations relatives aux efforts subis par chaque organe de contact au sol soient inférieures au seuil de non contact.

Le procédé selon l'invention peut avantageusement prendre en compte plusieurs conditions opérationnelles lors de l'atterrissage et/ou de décollage du giravion.

Par exemple, lors d'un atterrissage, si l'information relative au pas collectif des pales de chaque rotor de sustentation est mesurée inférieure au seuil de recentrage, la phase de recentrage des pas de pales de chaque rotor vers la position « zéro pitch » étant effectuée, puis si chaque information relative au pas collectif des pales de chaque rotor de sustentation augmente sans avoir été inférieure au seuil de décollage, l'étape de commande automatique des pas des pales de chaque rotor est réalisée comme pour un décollage dès que l'information relative au pas collectif des pales de chaque rotor de sustentation est mesurée supérieure à un seuil spécifique, par exemple égal à 35% de l'amplitude de variation de ce pas collectif. L'atterrissage n'est pas dans ce cas considéré comme terminé et l'étape de commande automatique des pas des pales de chaque rotor est réalisée afin de préparer le giravion pour un éventuel décollage.

Au moment de l'application de cette phase de recentrage lors d'un atterrissage, les actions du pilote sur les commandes de pas du giravion sont retranchées de la position centrée de chaque rotor correspondant à la position « zéro pitch » afin que les rotors se positionnent à cette position « zéro pitch ». Des éventuelles consignes d'une loi de pilotage assurant la stabilité du giravion s'additionnent à cette position « zéro pitch ».

Cependant, après le moment de l'application de cette phase de recentrage, des actions éventuelles effectuées par le pilote sur les commandes de pas du giravion s'additionnent à la position « zéro pitch ». De même, des consignes d'une loi de pilotage assurant la stabilité du giravion appliquées après ce moment s'additionnent également à cette position « zéro pitch ».

En outre, avant cette phase de recentrage, seules les actions du pilote sont appliquées aux rotors auxquelles s'additionnent éventuellement les consignes d'une loi de pilotage assurant la stabilité du giravion.

Selon un autre exemple, lors d'un décollage, si l'information relative au pas collectif des pales de chaque rotor de sustentation est mesurée supérieure au seuil de décollage, puis est diminuée sans avoir été supérieure au seuil de recentrage supérieur au seuil de décollage, la phase de recentrage des rotors vers la position « zéro pitch » est effectuée lorsque l'information relative au pas collectif des pales de chaque rotor de sustentation est mesurée inférieure à un seuil limite, par exemple égal à 15% de l'amplitude de variation de ce pas collectif.

Selon un autre aspect, si une opération de roulage au sol a été réalisée après un atterrissage, par exemple sur une pente faible avec une inclinaison inférieure ou égale à 3°, avec une information relative au pas collectif des pales de chaque rotor de sustentation inférieure au seuil de décollage, la mémorisation des informations relatives aux pas des pales de chaque rotor est inhibée. Lors d'un décollage, l'étape de commande automatique des pas des pales de chaque rotor pendant la phase de décollage est alors réalisée vers une position prédéterminée des pales de chaque rotor en remplacement des mesures effectuées lors dudit atterrissage, cette position prédéterminée des pales de chaque rotor correspondant à un équilibre du giravion en vol stationnaire, sans vent et avec une masse moyenne prédéterminée du giravion avec un centrage des masses prédéterminé, par exemple neutre.

De plus, afin de ne pas perturber les phases de roulage du giravion, toujours par exemple sur une pente faible inférieure ou égale à 3°, l'étape de commande automatique des pas des pales de chaque rotor pendant la phase de décollage est alors réalisée lorsque l'information relative au pas collectif des pales de chaque rotor de sustentation est supérieure à un seuil spécifique supérieur au seuil de décollage. Le seuil spécifique est par exemple égal à 35% de l'amplitude de variation du pas collectif des pales de chaque rotor de sustentation.

Selon un autre aspect, l'étape de commande automatique des pas des pales de chaque rotor pendant une phase de décollage du giravion peut constituer la commande complète de la loi de pilotage du giravion. L'étape de commande automatique permet avantageusement de diminuer fortement la contribution du pilote dans cette phase de décollage particulièrement délicate et générant une très importante charge de travail.

Selon un autre aspect, la phase de recentrage des pas de pales de chaque rotor vers la position « zéro pitch » pendant une phase d'atterrissage du giravion peut constituer la commande complète de la loi de pilotage du giravion. La phase de recentrage permet avantageusement de diminuer fortement la contribution du pilote dans cette phase d'atterrissage.

Cependant, des actions éventuelles effectuées par le pilote sur les commandes de pas du giravion après le moment de l'application de l'étape de commande s'additionnent à cette commande complète de l'étape de commande automatique. De même, des consignes d'une loi de pilotage assurant la stabilité du giravion lors de la phase de décollage appliquées après le moment de l'application de l'étape de commande s'additionnent à cette commande complète de l'étape de commande automatique.

Selon un autre exemple, dans le cas particulier où le pilote agit sur le levier de commande du pas cyclique des pales de chaque rotor de sustentation et/ou au palonnier de commande de pas des pales d'un rotor auxiliaire au moment où l'étape de commande automatique des pas des pales de chaque rotor s'opère pendant la phase de décollage, les actions du pilote sont retranchées à cette commande complète de l'étape de commande automatique de sorte que les rotors se positionnent selon la commande complète de l'étape de commande automatique. Par exemple, si le pilote positionne manuellement ses commandes aux valeurs de la commande complète de l'étape de commande automatique, il n'y a alors aucune variation de commande des pas des pales de chaque rotor lors de l'étape de commande automatique des pas des pales de chaque rotor. Par contre, des consignes d'une loi de pilotage assurant la stabilité du giravion lors de la phase de décollage appliquées au moment de l'application de l'étape de commande s'additionnent à cette commande complète de l'étape de commande automatique.

En outre, avant l'application de l'étape de commande automatique des pas des pales de chaque rotor, seules les actions du pilote sont appliquées aux rotors auxquelles s'additionnent éventuellement des consignes d'une loi de pilotage assurant la stabilité du giravion.

Selon un autre aspect, le procédé peut comporter une étape de décollage automatique réalisée en appliquant une consigne croissante sur le pas collectif des pales de chaque rotor de sustentation du giravion, l'étape de commande automatique des pas des pales de chaque rotor étant réalisée simultanément telle que précédemment décrite.

Selon un autre aspect, lorsque l'étape de mesure de ladite au moins une information relative aux pas des pales de chaque rotor est effectuée en continue ou de façon échantillonnée pendant la phase d'atterrissage, une étape de décollage automatique peut être réalisée en appliquant une consigne croissante sur le pas collectif des pales de chaque rotor de sustentation du giravion, au cours du décollage automatique, l'étape de commande automatique des pas des pales de chaque rotor appliquant successivement et en ordre inversé des commandes automatiques des pas des pales de chaque rotor selon les mesures des pas des pales de chaque rotor effectuées pendant la phase d'atterrissage.

La présente invention vise également un système d'assistance au décollage d'un giravion, le giravion comportant :
- un fuselage,
- au moins un rotor muni d'une pluralité de pales, dont au moins un rotor de sustentation,
- des dispositifs de commande des pas des pales de chaque rotor, et
- un train d'atterrissage muni d'au moins trois organes de contact au sol, chacun étant relié audit fuselage par un organe de liaison.

Le système d'assistance au décollage d'un giravion comporte :
- au moins un calculateur,
- au moins un dispositif de mesure d'au moins une information relative aux efforts subis par chaque organe de contact au sol du train d'atterrissage, et
- au moins un dispositif de mesure d'au moins une information relative aux pas des pales d'au moins un rotor.

Le système d'assistance au décollage est configuré pour mettre en œuvre le procédé d'assistance au décollage tel que précédemment décrit.

La présente invention vise enfin un giravion comportant :
- un fuselage,
- au moins un rotor muni d'une pluralité de pales, dont au moins un rotor de sustentation,
- des dispositifs de commande, des pas des pales de chaque rotor,
- un train d'atterrissage muni d'au moins trois organes de contact au sol, chacun étant relié audit fuselage par un organe de liaison, et
- un système d'assistance au décollage d'un giravion tel que précédemment décrit.

L'invention et ses avantages apparaîtront avec plus de détails dans le cadre de la description qui suit avec des exemples donnés à titre illustratif en référence aux figures annexées qui représentent :
- la figure 1, un giravion muni d'un train d'atterrissage à roues,
- la figure 2, un giravion muni d'un train d'atterrissage à patins, et
- les figures 3 à 6, les étapes d'un atterrissage sur un sol en pente.

Les éléments présents dans plusieurs figures distinctes sont affectés d'une seule et même référence.

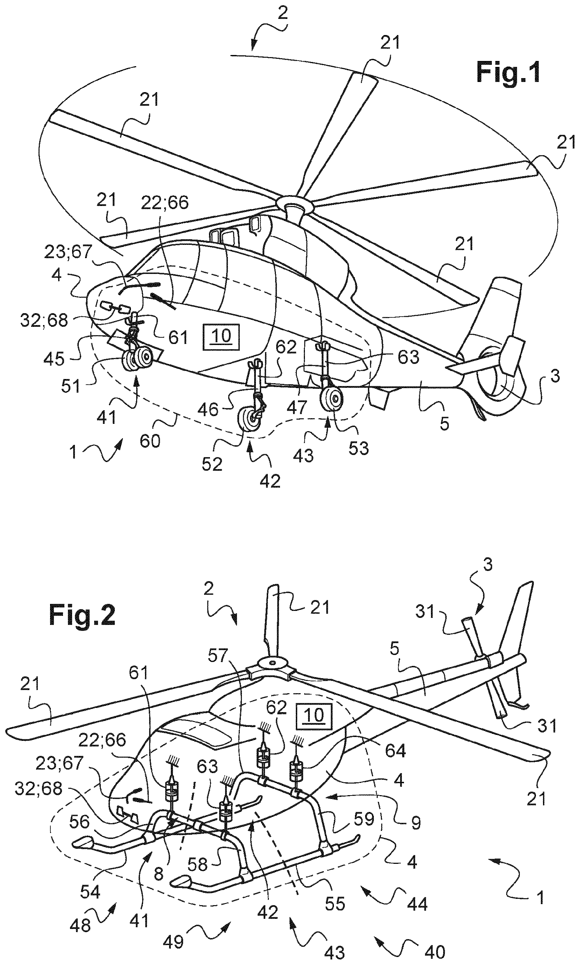

Les figures 1 et 2 représentent un giravion 1 comportant un fuselage 4, au moins un rotor 2,3 muni d'une pluralité de pales 21,31, des dispositifs de commande 22,23,32 des pas des pales 21,31 de chaque rotor 2,3, un train d'atterrissage 40 muni d'au moins trois organes de contact au sol 41,42,43,44 et un système 60 d'assistance au décollage d'un giravion 1. Le système 60 d'assistance au décollage d'un giravion 1 permet d'assister un pilote lors d'un décollage aussi bien sur un sol plat et horizontal que sur une pente.

Plus précisément, le giravion 1 comporte un rotor principal 2 de sustentation agencé au dessus du fuselage 4 et un rotor auxiliaire arrière 3 anticouple et de contrôle de mouvement en lacet agencé à l'extrémité d'une poutre de queue 5 relié au fuselage 4. Le rotor principal 2 comporte plusieurs pales 21 dont le pas peut être modifié de façon collective par l'intermédiaire d'un manche 22 de commande de pas collectif et de façon cyclique par l'intermédiaire d'un levier de commande 23 de pas cyclique. Le rotor auxiliaire arrière 3 comporte plusieurs pales 31 dont le pas peut être modifié de façon collective par l'intermédiaire d'un palonnier 32.

Le giravion 1 représenté sur la figure 1 comporte un train d'atterrissage 40 muni de trois atterrisseurs à roue. Chaque atterrisseur à roue comporte un organe de contact au sol 41,42,43 muni d'au moins une roue 51,52,53 et d'un organe de liaison 45,46,47 reliant ladite au moins une roue 51,52,53 au fuselage 4 du giravion 1. L'atterrisseur 41 est situé à l'avant du giravion 1, comporte deux roues 51 et constitue un atterrisseur auxiliaire. Les atterrisseurs 42,43 sont situés à l'arrière du giravion 1, comportent chacun une seule roue 51,53 et constituent des atterrisseurs principaux.

Chaque roue 51,52,53 du train d'atterrissage à roues 40 peut être remplacée ou accompagnée par un ski afin de former un train d'atterrissage à skis.

Le giravion 1 représenté sur la figure 2 comporte un train d'atterrissage 40 muni de deux atterrisseurs à patins 48,49 munis chacun de deux organes de contact au sol 41,42,43,44. Chaque organe de contact au sol 41,42,43,44 comporte une partie d'un patin 54,55 et un organe de liaison 56,57,58,59 reliant le patin 54,55 au fuselage 4. Ainsi, deux organes de liaison 56,57 relient un premier patin 54 au fuselage 4 et deux autres organes de liaison 58,59 relient un second patin 55 au fuselage 4. Par exemple, deux traverses 8,9 reliant simultanément les deux patins 54,55 au fuselage 4 peuvent être formées chacune par deux organes de liaison 56,57,58,59 reliés à chacun des deux patins 54,55.

Le système 60 d'assistance au décollage d'un giravion 1 comporte un calculateur 10, au moins un dispositif de mesure 61-64 d'au moins une information relative aux efforts subis par chaque organe de contact au sol 41,42,43,44 du train d'atterrissage 40, à savoir une information qui varie lors de l'atterrissage, et au moins un dispositif de mesure 66-68 d'au moins une information relative aux pas des pales 21,31 des rotors 2,3, à savoir une information qui varie avec les pas des pales 21, 31.

Un dispositif de mesure 61-64 d'au moins une information relative aux efforts subis par chaque organe de contact au sol 41,42,43,44 du train d'atterrissage 40 peut être agencé sur chaque atterrisseur du train d'atterrissage 40 et plus précisément sur chaque organe de contact au sol 41,42,43,44. Par exemple pour le giravion 1 représenté à la figure 1, un dispositif de mesure 61,62,63 est agencé sur chaque organe de liaison 45,46,47. Pour le giravion 1 représenté à la figure 2, deux dispositifs de mesure 61,62,63,64 sont agencés sur chaque atterrisseur à patin. Par exemple, deux dispositifs de mesure 61,62,63,64 sont ainsi agencés sur chaque traverse 8,9, plus précisément sur chaque organe de liaison 56,57,58,59 afin de détecter et de mesurer des efforts subis respectivement par une zone avant et une zone arrière de chaque atterrisseur à patin 48,49.

Chaque dispositif de mesure 61-64 d'au moins une information relative aux efforts subis par chaque organe de contact au sol 41,42,43,44 permet ainsi de mesurer directement un effort subi par cet organe de contact au sol 41,42,43,44 ou l'organe de liaison 45,46,47, 56,57,58,59 ou bien de mesurer un enfoncement ou une déformation de chaque organe de contact au sol 41,42,43,44 ou de l'organe de liaison 45,46,47, 56,57,58,59. La mesure d'un enfoncement ou d'une déformation de chaque organe de contact au sol 41,42,43,44 permet de déduire l'effort subi par l'organe de contact au sol 41,42,43,44 par l'intermédiaire par exemple d'une table de corrélation.

Un dispositif de mesure 66-68 d'au moins une information relative aux pas des pales 21,31 des rotors 2,3 peut être agencé sur chaque dispositif de commande 22,23,32 d'une variation des pas des pales 21,31 d'un rotor 2,3. Un dispositif de mesure 66 est par exemple agencé sur le manche 22 de commande de pas collectif des pales 21 du rotor principal 2 de sustentation. Un dispositif de mesure 67 est par exemple agencé sur le levier de commande 23 de pas cyclique des pales 21 du rotor principal 2 de sustentation. Un dispositif de mesure 66 est par exemple agencé sur le palonnier 32 modifiant le pas collectif des pales 31 du rotor auxiliaire arrière 3.

De la sorte, les dispositifs de mesure 66-68 mesurent les positions de chaque dispositif de commande 22,23,32 pilotant la variation des pas des pales 21,31 des rotors 2,3 qui sont sensiblement proportionnelles aux valeurs réelles de pas de ces pales 21,31.

Les dispositifs de mesure 66-68 d'une information relative aux pas des pales 21,31 des rotors 2,3 peuvent aussi être agencés au plus près des pales 21,31 des rotors 2,3 afin de mesurer directement les pas de ces pales 21,31.

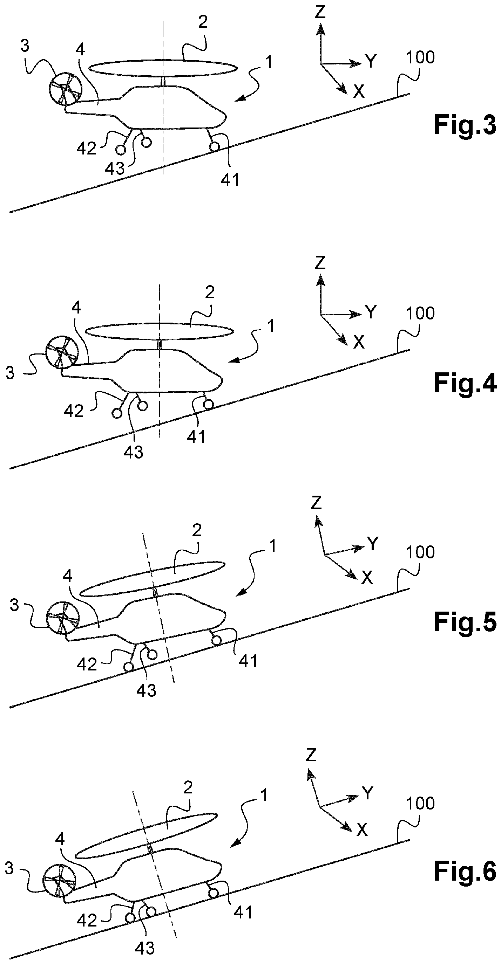

La phase d'atterrissage d'un giravion 1 sur un sol plat et horizontal ainsi que sur un sol en pente est une opération qui peut s'avérer complexe. En particulier sur un terrain non préparé ou en pente, la phase d'atterrissage débute par un vol stationnaire avec une assiette sensiblement horizontale et donc non parallèle au sol sur lequel le giravion 1 s'apprête à se poser. Les figures 3 à 6 représentent les différentes étapes d'une telle phase d'atterrissage du giravion 1 sur une pente 100.

Tout d'abord, après un vol stationnaire du giravion 1, le pilote commande une descente du giravion 1 selon une direction sensiblement verticale de sorte à rechercher un contact d'au moins un atterrisseur 41 du giravion 1 avec la pente 100, comme représenté sur la figure 3. A cet effet, le pilote fait baisser les pas des pales 21 du rotor principal 2 de sustentation. Par exemple, l'atterrisseur avant 41 du giravion 1 est le premier atterrisseur en contact avec la pente, comme représenté sur la figure 3, bien que selon les conditions opérationnelles, un autre des atterrisseurs 41,42,43 peut toucher le sol en premier. Le plan du disque rotor formé par les extrémités libres des pales 21 du rotor principal 2 de sustentation est sensiblement horizontal et donc non parallèle à la pente 100. Les informations relatives aux pas des pales 21,31 des rotors 2,3 obtenues lors de cette première étape sont très proches de celles correspondantes au vol stationnaire et la contribution de l'inclinaison de la pente 100 n'est pas encore répercutée sur les positions des dispositifs de commande 22,23,32.

Ensuite, le pilote continue de commander une descente du giravion 1 toujours selon une direction sensiblement verticale, comme représenté sur la figure 4, provoquant un enfoncement progressif ou une déformation de l'atterrisseur 41. Dans cette phase, le plan du disque rotor du rotor principal 2 de sustentation reste sensiblement horizontal pour maintenir le giravion 1 en équilibre sur la pente.

Le pilote ou les aides de stabilisation apportées par des lois de pilotage agissent alors sur le levier 23 de pas cyclique des pales 21 du rotor principal 2 ainsi qu'éventuellement sur le palonnier 32 de sorte à maintenir un équilibre du giravion 1 et de ses rotors 2 et 3. Dans cette phase, un deuxième atterrisseur 42 peut venir en contact avec la pente 100.

Il s'agit du moment opportun pour mémoriser les informations relatives aux pas des pales 21,31 de chaque rotor 2,3. En effet, il faut attendre qu'un premier train d'atterrissage à roue soit suffisamment enfoncé ou bien que deux trains d'atterrissage soit en contact avec le sol pour que les pas des pales 21,31 des rotors 2,3 obtenues pour maintenir le giravion 1 en équilibre lors de cet atterrissage soient représentatives de l'équilibre du giravion 1 à retrouver dans la phase de décollage. Ici, les moyens de détection des forces de réaction du sol sur le giravion 1 permettent de détecter ce moment opportun afin de mémoriser ces informations relatives aux mesures de pas des pales 21,31 des rotors 2,3 obtenues pour maintenir le giravion 1 en équilibre.

Afin de finir l'atterrissage, le pilote continue d'agir sur le manche 22 de commande du pas collectif des pales 21 du rotor principal 2 de sustentation pour l'abaisser vers la position plein petit pas. Dans le même temps, le pilote ou une loi de pilotage recentre et le levier 23 de commande de pas cyclique des pales 21 du rotor principal 2 et le palonnier 32 de commande du pas collectif des pales 31 du rotor auxiliaire arrière 3 autour de positions centrées respectivement pour chaque axe de commande du giravion 1, à savoir un axe de roulis, de tangage et de lacet. Chaque position centrée induit des poussées minimales, voire des poussées nulles, exercées respectivement par chaque rotor 2,3 selon les axes du giravion 1. Ces positions centrées sont communément désignées « zéro pitch ». Cela permet de positionner le rotor principal 2 de sustentation sensiblement perpendiculaire au mât rotor afin de limiter les moments subis par le mât susceptibles de conduire à des endommagements de pièces mécaniques du giravion 1.

Lors de cette phase, le plan du disque rotor du rotor principal 2 de sustentation continue de s'incliner jusqu'à être sensiblement parallèle à la pente 100, comme représenté sur la figure 6. Le troisième atterrisseur 43 est venu alors en contact avec la pente 100. Le giravion 1 est posé sur la pente 100.

Ces étapes de la phase d'atterrissage sur un sol en pente sont sensiblement identiques pour un giravion 1 muni d'un train d'atterrissage 40 à patins, une zone avant ou arrière d'un patin 48,49 pouvant entrer en premier en contact avec la pente 100.

Le giravion 1 ne stationne généralement pas longtemps sur un sol en pente et redécolle rapidement. La phase de décollage doit être exécutée de façon sensiblement verticale, c'est à dire de façon sensiblement similaire à la phase d'atterrissage.

Dès lors, afin de simplifier le travail du pilote et de sécuriser la phase de décollage du giravion 1 depuis ce sol en pente, le système 60 d'assistance au décollage est configuré pour mettre en œuvre un procédé d'assistance au décollage d'un giravion 1 visant à positionner les pales 21,31 des rotors 2,3 du giravion 1, dès le démarrage de la phase de décollage, à des positions de pas similaires à celles utilisées durant la phase d'atterrissage. Dans ce but, le procédé d'assistance au décollage d'un giravion 1 sur une pente comporte les étapes suivantes.

Tout d'abord, une étape de mesure d'au moins une information relative aux efforts subis par chaque organe de contact au sol 41,42,43,44 du train d'atterrissage 40 pendant une phase d'atterrissage sur la pente 100 permet, par l'intermédiaire des dispositifs de mesure 61-64, de mesurer directement ou indirectement les efforts subis par chaque organe de contact au sol 41,42,43,44 du train d'atterrissage 40.

Une étape de mesure d'au moins une information relative aux pas des pales 21,31 de chaque rotor 2,3 pendant la phase d'atterrissage du giravion 1 est également réalisée afin de mesurer, par l'intermédiaire des dispositifs de mesure 66-68, directement ou indirectement les valeurs de pas collectifs et/ou cycliques des pales 21,31 des rotors 2,3 du giravion 1, par exemple en mesurant la position des dispositifs de commande 22,23,32 de ces pas.

Cette étape de mesure d'au moins une information relative aux pas des pales 21,31 peut être effectuée en continue ou de façon échantillonnée pendant la phase d'atterrissage ou bien à un moment opportun de la phase d'atterrissage. Ce moment opportun correspond par exemple au moment où se produit une augmentation significative d'un effort sur un organe de contact au sol 41,42,43,44 en contact avec le sol, ce seul organe de contact au sol 41,42,43,44 étant en contact avec le sol, comme représenté à la figure 4. Une telle augmentation significative est par exemple considérée atteinte lorsqu'une information relative aux efforts subis par un organe de contact au sol 41,42,43,44 est supérieure à un seuil d'enfoncement et les informations relatives aux efforts subis par les autres organes de contact au sol 41,42,43,44 sont inférieures à un seuil de non contact, le seuil de non contact étant inférieur au seuil d'enfoncement.

Ce moment opportun peut aussi être l'instant de contact au sol du deuxième organe de contact au sol comme représenté à la figure 5. Un contact avec le sol de deux organes de contact au sol 41,42,43,44 est détecté lorsque des informations relatives aux efforts subis par deux organes de contact au sol 41,42,43,44 sont supérieures à un seuil de contact et une information relative aux efforts subis chacun des autres organes de contact au sol 41,42,43,44 est inférieure à un seuil de non contact, le seuil de non contact étant inférieur au seuil de contact.

Enfin, une étape de commande du pas des pales 21,31 des rotors 2,3 est réalisée pendant la phase de décollage du giravion 1 faisant suite à l'atterrissage. Durant cette étape de commande du pas des pales 21,31 des rotors 2,3, on applique les mesures effectuées lors de la phase d'atterrissage de sorte à réduire la charge du pilote du giravion 1 et sécuriser cette phase de décollage.

Cette étape de commande du pas des pales 21,31 des rotors 2,3 pour une phase de décollage du giravion 1 est réalisée dès la détection d'un engagement de la phase du décollage du giravion 1. Cet engagement de la phase du décollage est détecté par exemple dès la réalisation d'une action du pilote augmentant le pas collectif des pales 21,31 du rotor principal 2, typiquement en agissant sur le manche 22 de commande de pas collectif.

Cet engagement de la phase du décollage peut aussi être détecté dès qu'au moins une information relative aux pas collectif des pales 21,31 du rotor principal 2 de sustentation, mesurée par l'intermédiaire d'un dispositif de mesure 66-68, est supérieure à un seuil de décollage.

En outre, le procédé peut comporter une étape de mémorisation des mesures de l'information relative aux pas des pales 21,31 des rotors 2,3. Cette mémorisation est effectuée dans une mémoire du calculateur 10 ou bien dans une mémoire relié au calculateur 10.

Enfin, le procédé peut comporter une étape de décollage automatique réalisée simultanément à l'étape de commande automatique des pas des pales 21,31 des rotors 2,3 et appliquant une consigne croissante sur le pas collectif des pales 21 du rotor principal 2 de sustentation du giravion 1. Le giravion 1 peut ainsi décoller automatiquement et en sécurité sur un sol plat ou bien sur un sol en pente.

De plus, lorsque l'étape de mesure d'au moins une information relative aux pas des pales 21,31 peut être effectuée en continue ou de façon échantillonnée pendant la phase d'atterrissage, le procédé peut aussi comporter une étape de décollage automatique en appliquant une consigne croissante sur le pas collectif des pales 21 du rotor principal 2 de sustentation du giravion 1, l'étape de commande automatique des pas des pales 21,31 de chaque rotor 2,3 appliquant successivement et en ordre inversé des commandes des pas des pales 21,31 des rotors 2,3 selon les mesures des pas des pales 21,31 des rotors 2,3 effectuées pendant la phase d'atterrissage.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé d'assistance au décollage d'un giravion (1), ledit giravion (1) comportant :
- un fuselage (4),
- au moins un rotor (2,3) muni d'une pluralité de pales (21,31), dont au moins un rotor de sustentation (2),
- des dispositifs de commande (22,23,32) des pas desdites pales (21,31) dudit au moins un rotor (2,3), et
- un train d'atterrissage (40) muni d'au moins trois organes de contact au sol (41, 42, 43, 44), chacun étant relié audit fuselage (4) par un organe de liaison (45, 46, 47; 56, 57, 58, 59),
**caractérisé en ce que** ledit procédé comporte les étapes suivantes :
- mesure d'au moins une information relative aux efforts subis par chaque organe de contact au sol (41,42,43,44) pendant une phase d'atterrissage,
- mesure d'au moins une information relative auxdits pas desdites pales (21,31) dudit au moins un rotor (2,3) pendant ladite phase d'atterrissage dudit giravion (1), et
- commande automatique desdits pas desdites pales (21,31) dudit au moins un rotor (2,3) pendant ladite phase de décollage dudit giravion (1) faisant suite audit atterrissage en fonction desdites mesures effectuées lors dudit atterrissage.

2. Procédé selon la revendication 1,
**caractérisé en ce que** ladite au moins une information relative auxdits pas desdites pales (21,31) dudit au moins un rotor (2,3) comporte une mesure de la position d'au moins un dispositif de commande (22,32) desdits pas desdites pales (21,31) dudit au moins un rotor (2,3) ou bien une mesure directe desdits pas desdites pales (21,31) dudit au moins un rotor (2,3) au niveau dudit au moins un rotor (2,3).

3. Procédé selon l'une quelconque des revendications 1 à 2,
**caractérisé en ce que** lorsque ledit giravion (1) comporte au moins trois rotors de sustentation (2) dont le pas desdites pales (21) est variable uniquement collectivement, ladite au moins une information relative auxdits pas desdites pales (21,31) dudit au moins un rotor (2,3) comporte le pas collectif desdites pales (21) de chaque rotor de sustentation (2) et/ou une vitesse de rotation de chaque rotor de sustentation (2) et/ou l'orientation de gouvernes agencées dans le flux d'air balayant au moins un rotor de sustentation (2).

4. Procédé selon l'une quelconque des revendications 1 à 2,
**caractérisé en ce que** lorsque ledit giravion (1) comporte au moins un rotor de sustentation (2) dont le pas desdites pales (21) est variable collectivement et cycliquement, ladite au moins une information relative auxdits pas desdites pales (21,31) dudit au moins un rotor (2,3) comporte le pas collectif et le pas cyclique desdites pales (21) de chaque rotor de sustentation (2).

5. Procédé selon l'une quelconque des revendications 1 à 4,
**caractérisé en ce que** lorsque ledit giravion (1) comporte au moins un rotor auxiliaire (3) dont le pas desdites pales (31) est variable uniquement collectivement, ladite au moins une information relative auxdits pas desdites pales (21,31) dudit au moins un rotor (2,3) comporte le pas collectif desdites pales (31) de chaque rotor auxiliaire (3).

6. Procédé selon l'une quelconque des revendications 1 à 5,
**caractérisé en ce que** ladite étape de mesure de ladite au moins une information relative auxdits pas desdites pales (21,31) est effectuée en continue ou de façon échantillonnée pendant ladite phase d'atterrissage, chaque mesure de ladite au moins une information relative auxdits pas desdites pales (21,31) étant associée auxdites mesures de ladite au moins une information relative auxdits efforts subis par chaque organe de contact au sol (41,42,43,44).

7. Procédé selon l'une quelconque des revendications 1 à 6,
**caractérisé en ce que** ladite étape de commande automatique desdits pas desdites pales (21,31) dudit au moins un rotor (2,3) est réalisée en utilisant ladite au moins une information relative auxdits pas desdites pales (21,31) dudit au moins un rotor (2,3) mesurées à un moment opportun de ladite phase d'atterrissage, ledit moment opportun étant atteint quand soit un seul organe de contact au sol (41,42,43,44) est en contact avec le sol et une augmentation significative d'un effort exercé sur ledit organe de contact au sol (41,42,43,44) en contact avec le sol est détectée, soit un contact avec le sol de deux organes de contact au sol (41,42,43,44) est détecté.

8. Procédé selon l'une quelconque des revendications 1 à 7,
**caractérisé en ce que** ladite étape de mesure de ladite au moins une information relative auxdits pas desdites pales (21,31) est effectuée quand soit un seul organe de contact au sol (41,42,43,44) est en contact avec le sol et une augmentation significative d'un effort exercé sur ledit organe de contact au sol (41,42,43,44) en contact avec le sol est détectée, soit un contact avec le sol de deux organes de contact au sol (41,42,43,44) est détecté.

9. Procédé selon l'une quelconque des revendications 7 et 8,
**caractérisé en ce qu'**un seul organe de contact au sol est en contact avec le sol et une augmentation significative d'un effort sur ledit organe de contact au sol (41,42,43,44) en contact avec le sol est détectée lorsqu'une information relative aux efforts subis par un organe de contact au sol (41,42,43,44) est supérieure à un seuil d'enfoncement et des informations relatives aux efforts subis par lesdits autres organes de contact au sol (41,42,43,44) sont inférieures à un seuil de non contact, ledit seuil de non contact étant inférieur audit seuil d'enfoncement.

10. Procédé selon l'une quelconque des revendications 7 et 8,
**caractérisé en ce qu'**un contact avec le sol de deux organes de contact au sol (41,42,43,44) est détecté lorsque des informations relatives aux efforts subis par deux organes de contact au sol (41,42,43,44) sont supérieures à un seuil de contact et une information relative aux efforts subis par ledit au moins un autre organe de contact au sol (41,42,43,44) est inférieure à un seuil de non contact, ledit seuil de non contact étant inférieur audit seuil de contact.

11. Procédé selon l'une quelconque des revendications 1 à 10,
**caractérisé en ce que** ladite étape de commande automatique desdits pas desdites pales (21,31) dudit au moins un rotor (2,3) pour une phase de décollage dudit giravion (1) est réalisée dès la détection d'un engagement de ladite phase dudit décollage dudit giravion (1).

12. Procédé selon la revendication 11,
**caractérisé en ce que** ledit engagement de ladite phase dudit décollage est détecté dès qu'au moins une information relative audit pas collectif desdites pales (21) dudit au moins un rotor (2) de sustentation est supérieure à un seuil de décollage.

13. Procédé selon l'une quelconque des revendications 1 à 12,
**caractérisé en ce que** ladite étape de mesure d'au moins une information relative aux efforts subis par chaque organe de contact au sol (41,42,43,44) dudit train d'atterrissage (40) pendant ladite phase d'atterrissage comporte une mesure d'un effort subi par chaque organe de contact au sol (41,42,43,44) ou bien une mesure d'un enfoncement ou d'une déformation de chaque organe de contact au sol (41,42,43,44).

14. Procédé selon l'une quelconque des revendications 1 à 13,
**caractérisé en ce que** lorsque ledit train d'atterrissage (40) comporte au moins trois atterrisseurs à roue munis chacun d'un organe de contact au sol (41,42,43), chaque organe de contact au sol (41,42,43) comporte au moins une roue (51,52,53) et au moins un organe de liaison (45,46,47) reliant ladite au moins une roue (51,52,53) audit fuselage (4), lorsque ledit train d'atterrissage (40) comporte au moins trois atterrisseurs à ski munis chacun d'un organe de contact au sol (41,42,43), chaque organe de contact au sol (41,42,43) comporte au moins un ski et au moins un organe de liaison reliant ledit au moins un ski audit fuselage (4), et lorsque ledit train d'atterrissage (40) comporte deux atterrisseurs à patins (48,49) munis chacun de deux organes de contact au sol (41,42,43,44), chaque organe de contact au sol (41,42,43,44) comporte une partie d'un patin (54,55) et un organe de liaison (56,57,58,59) reliant ledit patin (54,55) audit fuselage (4).

15. Procédé selon l'une quelconque des revendications 1 à 14,
**caractérisé en ce que** ladite au moins une information relative auxdits pas desdites pales (21,31) de chaque rotor (2,3) comportant une mesure directe desdits pas desdites pales (21,31) au niveau de chaque rotor (2,3), pendant ladite phase d'atterrissage, lorsqu'une loi d'aide au pilotage de stabilisation automatique dudit giravion (1) agit de façon dynamique sur le pas desdites pales (21,31) de chaque rotor (2,3), une contribution de ladite loi d'aide au pilotage de stabilisation automatique sur lesdits pas desdites pales (21,31) de chaque rotor (2,3) est retranchée de ladite information relative auxdits pas desdites pales (21,31) de chaque rotor (2,3) mesurée.

16. Procédé selon l'une quelconque des revendications 1 à 15,
**caractérisé en ce que** lorsqu'un pilote dudit giravion (1) baisse un manche (22) de commande du pas collectif desdites pales (21) de chaque rotor de sustentation (2) vers une position plein petit pas, une phase de recentrage desdits pas desdites pales (21,31) de chaque rotor (2,3) vers une position centrée est réalisée dès que ladite information relatif audit pas collectif desdites pales (21) de chaque rotor de sustentation (2) est inférieure à un seuil de recentrage et que ladite information relative aux efforts subis par chaque organe de contact au sol (41,42,43,44) est supérieure à un seuil d'atterrissage effectif représentant que ledit giravion (1) est au sol.

17. Procédé selon la revendication 16,
**caractérisé en ce que** lors d'un atterrissage, si ladite information relative au pas collectif desdites pales (21) de chaque rotor de sustentation (2) est mesurée inférieure à un seuil de recentrage, ladite phase de recentrage étant effectuée, puis que ladite information relative au pas collectif desdites pales (21) de chaque rotor de sustentation (2) augmente sans avoir été inférieure à un seuil de décollage, ladite étape de commande automatique desdits pas desdites pales (21,31) de chaque rotor (2,3) est réalisée comme pour un décollage dès que ladite information relative au pas collectif desdites pales (21) de chaque rotor de sustentation (2) est mesurée supérieure à un seuil spécifique.

18. Procédé selon l'une quelconque des revendications 1 à 17,
**caractérisé en ce que** lors d'un décollage, si ladite information relative au pas collectif desdites pales (21) de chaque rotor de sustentation (2) est mesurée supérieure à un seuil de décollage, puis est diminué sans avoir été supérieure à un seuil de recentrage supérieur audit seuil de décollage, une phase de recentrage de chaque rotor vers une position centrée est effectuée lorsque l'information relative au pas collectif desdites pales (21) de chaque rotor de sustentation (2) est mesurée inférieure à un seuil limite.

19. Procédé selon l'une quelconque des revendications 1 à 18,
**caractérisé en ce que** lors de ladite étape de commande automatique desdits pas desdites pales (21,31) de chaque rotor (2,3), toute action d'un pilote sur un dispositif de commande du pas cyclique des pales (21) de chaque rotor de sustentation (2) et/ou du pas des pales (31) d'un rotor auxiliaire (3), effectuée au moment où ladite étape de commande automatique s'opère, est retranchée à une commande complète d'une loi de pilotage dudit giravion (1), ladite commande complète de ladite loi de pilotage étant constituée par ladite étape de commande automatique desdits pas desdites pales (21,31) de chaque rotor (2,3) pendant une phase de décollage dudit giravion (1) ou par une phase de recentrage desdits pas desdites pales (21,31) de chaque rotor (2, 3) pendant une phase d'atterrissage dudit giravion (1).

20. Procédé selon l'une quelconque des revendications 1 à 19,
**caractérisé en ce que** lors de ladite étape de commande automatique desdits pas desdites pales (21,31) de chaque rotor (2,3), toute action d'un pilote sur un dispositif de commande du pas cyclique des pales (21) de chaque rotor de sustentation (2) et/ou du pas des pales (31) d'un rotor auxiliaire (3), effectuée après l'application de ladite étape de commande automatique, s'additionnent à une commande complète de ladite étape de commande automatique desdits pas desdites pales (21,31) de chaque rotor (2,3), ladite commande complète de ladite loi de pilotage étant constituée par ladite étape de commande automatique desdits pas desdites pales (21,31) de chaque rotor (2,3) pendant une phase de décollage dudit giravion (1) ou par une phase de recentrage desdits pas desdites pales (21,31) de chaque rotor (2,3) pendant une phase d'atterrissage dudit giravion (1).

21. Procédé selon l'une quelconque des revendications 1 à 20,
**caractérisé en ce que** ledit procédé comporte une étape de mémorisation de ladite au moins une information relative auxdits pas desdites pales (21,31) dudit au moins un rotor (2,3).

22. Procédé selon l'une quelconque des revendications 1 à 21,
**caractérisé en ce que** pour un décollage effectué alors qu'une opération de roulage au sol a été réalisée après un atterrissage sur une pente avec une inclinaison inférieure ou égale à 3°, avec une information relative au pas collectif desdites pales (21) de chaque rotor de sustentation (2) inférieure à un seuil de décollage, ladite étape de commande automatique desdits pas desdites pales (21,31) de chaque rotor (2,3) est réalisée vers une position prédéterminée desdites pales (21,31) de chaque rotor (2,3) en remplacement desdites mesures effectuées lors dudit atterrissage, ladite position prédéterminée desdites pales (21,31) de chaque rotor (2,3) correspondant à un équilibre dudit giravion (1) en vol stationnaire, sans vent et avec une masse prédéterminée dudit giravion (1) avec un centrage des masses prédéterminé.

23. Procédé selon l'une quelconque des revendications 1 à 22,
**caractérisé en ce que** ledit giravion (1) comportant au moins un rotor de sustentation (2) et au moins un rotor auxiliaire (3), lors de ladite étape de commande automatique desdits pas desdites pales (21,31) dudit au moins un rotor (2,3), un pilote dudit giravion (1) commande le pas collectif desdites pales (21) dudit au moins un rotor de sustentation (2), le pas cyclique desdites pales (21) dudit au moins un rotor de sustentation (2) et le pas desdites pales (31) d'au moins un rotor auxiliaire (3) étant commandés automatiquement.

24. Procédé selon l'une quelconque des revendications 1 à 23,
**caractérisé en ce que** ledit procédé comporte une étape de décollage automatique réalisée en appliquant une consigne croissante sur le pas collectif desdites pales (21) de chaque rotor de sustentation (2), l'étape de commande automatique desdits pas desdites pales (21,31) de chaque rotor (2,3) étant réalisée simultanément.

25. Procédé selon l'une quelconque des revendications 1 à 24,
**caractérisé en ce que** ledit procédé comporte une étape de décollage automatique réalisée en appliquant successivement et en ordre inversé des commandes automatiques desdits pas desdites pales (21,31) de chaque rotor (2,3) en fonction desdites mesures desdits pas desdites pales (21,31) de chaque rotor (2,3) effectuées pendant ladite phase d'atterrissage.

26. Système (60) d'assistance au décollage d'un giravion (1) sur une pente, ledit giravion (1) comportant un fuselage (4) ainsi qu'au moins un rotor (2,3) muni d'une pluralité de pales (21,31), dont au moins un rotor de sustentation, ledit giravion (1) comportant des dispositifs de commande (22,23,32) des pas desdites pales (21,31) dudit au moins un rotor (2,3), ledit giravion (1) comportant un train d'atterrissage (40) muni d'au moins trois organes de contact au sol (41,42,43,44), chacun étant relié audit fuselage (4) par un organe de liaison (45, 46, 47; 56, 57, 58, 59), ledit système d'assistance au décollage d'un giravion (1) comportant au moins un calculateur (10), ledit système d'assistance au décollage d'un giravion (1) comportant au moins un dispositif de mesure (61-64) d'au moins une information relative aux efforts subis par chaque organe de contact au sol (41,42,43,44) dudit train d'atterrissage (40), ledit système d'assistance au décollage d'un giravion (1) comportant au moins un dispositif de mesure (66-68) d'au moins une information relative auxdits pas desdites pales (21,31) dudit au moins un rotor (2,3), **caractérisé en ce que** ledit système (60) d'assistance au décollage est configuré pour mettre en œuvre le procédé selon l'une quelconque des revendications 1 à 25.

27. Giravion (1) comportant :
- un fuselage (4),
- au moins un rotor (2,3) muni d'une pluralité de pales (21,31), dont au moins un rotor de sustentation,
- des dispositifs de commande (22,23,32) des pas desdites pales (21,31) dudit au moins un rotor (2,3),
- un train d'atterrissage (40) muni d'au moins trois organes de contact au sol (41,42,43,44), chacun étant relié audit fuselage (4) par un organe de liaison (45, 46, 47; 56, 57, 58, 59), et
- un système (60) d'assistance au décollage d'un giravion (1) sur une pente,
**caractérisé en ce que** ledit système d'assistance au décollage est selon la revendication 26.

## Patentansprüche

1. Verfahren zur Unterstützung des Abhebens eines Drehflügelflugzeugs (1), wobei das Drehflügelflugzeug (1) umfasst:
- einen Rumpf (4),
- mindestens einen Rotor (2, 3) mit einer Mehrzahl von Blättern (21, 31), darunter mindestens einen Auftriebsrotor (2),
- Vorrichtungen (22, 23, 32) zum Steuern der Anstellwinkel der Blätter (21, 31) des mindestens einen Rotors (2, 3) und
- ein Landegestell (40) mit mindestens drei Bodenkon taktelementen (41, 42, 43, 44), die jeweils durch ein Verbindungselement (45, 46, 47; 56, 57, 58, 59) mit dem Rumpf (4) verbunden sind,
**dadurch gekennzeichnet, dass** das Verfahren die folgenden Schritte umfasst:
- Messen von mindestens einer Information betreffend die Kräfte, die auf jedes Bodenkontaktelement (41, 42, 43, 44) während einer Landephase einwirken,
- Messen von mindestens einer Information betreffend die Anstellwinkel der Blätter (21, 31) des mindestens einen Rotors (2, 3) während der Landephase des Drehflügelflugzeugs (1), und
- automatisches Steuern der Anstellwinkel der Blätter (21, 31) des mindestens einen Rotors (2, 3) während der auf die Landung folgenden Abhebephase des Drehflügelflugzeugs (1) in Abhängigkeit von den bei der Landung durchgeführten Messungen.

2. Verfahren nach Anspruch 1,
**dadurch gekennzeichnet, dass** die mindestens eine den Anstellwinkel der Blätter (21, 31) des mindestens einen Rotors (2, 3) betreffende Information eine Messung der Position von mindestens einer Steuervorrichtung (22, 32) für die Anstellwinkel der Blätter (21, 31) des mindestens einen Rotors (2, 3) oder eine direkte Messung der Anstellwinkel der Blätter (21, 31) des mindestens einen Rotors (2, 3) an dem mindestens einen Rotor (2, 3) umfasst.

3. Verfahren nach einem der Ansprüche 1 bis 2,
**dadurch gekennzeichnet, dass**, wenn das Drehflügelflugzeug (1) mindestens drei Auftriebsrotoren (2) aufweist, bei denen der Anstellwinkel der Blätter (21) nur kollektiv variabel ist, die mindestens eine Information bezüglich des Anstellwinkels der Blätter (21, 31) des mindestens einen Rotors (2, 3) die kollektive Steigung der Blätter (21) jedes Auftriebsrotors (2) und/oder eine Drehgeschwindigkeit jedes Auftriebsrotors (2) und/oder die Ausrichtung von Rudern umfasst, die in dem Luftstrom angeordnet sind, der über mindestens einen Auftriebsrotor (2) streicht.

4. Verfahren nach einem der Ansprüche 1 bis 2,
**dadurch gekennzeichnet, dass**, wenn das Drehflügelflugzeug (1) mindestens einen Auftriebsrotor (2) aufweist, bei dem der Anstellwinkel der Blätter (21) kollektiv und zyklisch variabel ist, die mindestens eine Information bezüglich der Anstellwinkel der Blätter (21, 31) des mindestens einen Rotors (2, 3) den kollektiven Anstellwinkel und den zyklischen Anstellwinkel der Blätter (21) jedes Auftriebsrotors (2) umfasst.

5. Verfahren nach einem der Ansprüche 1 bis 4,
**dadurch gekennzeichnet, dass**, wenn das Drehflügelflugzeug (1) mindestens einen Hilfsrotor (3) aufweist, bei dem der Anstellwinkel der Blätter (31) nur kollektiv variabel ist, die mindestens eine den Anstellwinkel der Blätter (21, 31) des mindestens einen Rotors (2, 3) betreffende Information den kollektiven Anstellwinkel der Blätter (31) jedes Hilfsrotors (3) umfasst.

6. Verfahren nach einem der Ansprüche 1 bis 5,
**dadurch gekennzeichnet, dass** der Schritt des Messens der mindestens einen den Anstellwinkel der Blätter (21, 31) betreffenden Information kontinuierlich oder abgetastet während der Landephase durchgeführt wird, wobei jede Messung der mindestens einen den Anstellwinkel der Blätter (21, 31) betreffenden Information mit den Messungen der mindestens einen die auf jedes Bodenkontaktelement (41, 42, 43, 44) einwirkenden Kräfte betreffenden Information verknüpft wird.

7. Verfahren nach einem der Ansprüche 1 bis 6,
**dadurch gekennzeichnet, dass** der Schritt des automatischen Steuerns der Anstellwinkel der Blätter (21, 31) des mindestens einen Rotors (2, 3) unter Verwendung der mindestens einen zu einem geeigneten Zeitpunkt in der Landephase gemessenen, den Anstellwinkel der Blätter (21, 31) des mindestens einen Rotors (2, 3) betreffenden Information durchgeführt wird, wobei der geeignete Zeitpunkt erreicht wird, wenn entweder nur ein Bodenkontaktelement (41, 42, 43, 44) in Bodenkontakt ist und ein signifikanter Anstieg einer auf das in Bodenkontakt befindliche Bodenkontaktelement (41, 42, 43, 44) ausgeübten Kraft erfasst wird, oder ein Bodenkontakt von zwei Bodenkontaktelementen (41, 42, 43, 44) erfasst wird.

8. Verfahren nach einem der Ansprüche 1 bis 7,
**dadurch gekennzeichnet, dass** der Schritt des Messens der mindestens einen die Anstellwinkel der Blätter (21, 31) betreffenden Information durchgeführt wird, wenn entweder ein einzelnes Bodenkontaktelement (41, 42, 43, 44) in Kontakt mit dem Boden ist und ein signifikanter Anstieg einer auf das den Boden berührende Bodenkontaktelement (41, 42, 43, 44) einwirkenden Kraft erfasst wird, oder ein Bodenkontakt von zwei Bodenkontaktelementen (41, 42, 43, 44) erfasst wird.

9. Verfahren nach einem der Ansprüche 7 und 8,
**dadurch gekennzeichnet, dass** nur ein Bodenkontaktelement in Bodenkontakt ist und ein signifikanter Anstieg einer auf das Bodenkontaktelement (41, 42, 43, 44) in Bodenkontakt einwirkenden Kraft erfasst wird, wenn eine die auf ein Bodenkontaktelement (41, 42, 43, 44) in Bodenkontakt einwirkenden Kräfte betreffende Information größer als ein Einsenkungsschwellenwert ist und die auf die anderen Bodenkontaktorgane (41, 42, 43, 44) einwirkenden Kräfte betreffende Information kleiner als ein Nichtkontaktschwellenwert ist, wobei der Nichtkontaktschwellenwert kleiner als der Einsenkungsschwellenwert ist.

10. Verfahren nach einem der Ansprüche 7 und 8,
**dadurch gekennzeichnet, dass** ein Bodenkontakt von zwei Bodenkontaktelementen (41, 42, 43, 44) erfasst wird, wenn Informationen über die auf zwei Bodenkontaktelemente (41, 42, 43, 44) einwirkenden Kräfte größer als ein Kontaktschwellenwert sind und Informationen über die auf das mindestens eine andere Bodenkontaktelement (41, 42, 43, 44) einwirkenden Kräfte kleiner als ein Nichtkontaktschwellenwert sind, wobei der Nichtkontaktschwellenwert kleiner als der Kontaktschwellenwert ist.

11. Verfahren nach einem der Ansprüche 1 bis 10,
**dadurch gekennzeichnet, dass** der Schritt des automatischen Steuerns der Anstellwinkel der Blätter (21, 31) des mindestens einen Rotors (2, 3) für eine Abhebephase des Drehflügelflugzeugs (1) durchgeführt wird, sobald ein Eintritt in die Abhebephase des Drehflügelflugzeugs (1) erfasst wird.

12. Verfahren nach Anspruch 11,
**dadurch gekennzeichnet, dass** der Eintritt in die Abhebephase erfasst wird, sobald mindestens eine den kollektiven Anstellwinkel des mindestens einen Auftriebsrotors (2) betreffende Information größer als ein Abhebeschwellenwert ist.

13. Verfahren nach einem der Ansprüche 1 bis 12,
**dadurch gekennzeichnet, dass** der Schritt des Messens mindestens einer die auf jedes Bodenkontaktelement (41, 42, 43, 44) des Landegestells (40) während der Landephase einwirkenden Kräfte betreffenden Information eine Messung einer auf jedes Bodenkontaktelement (41, 42, 43, 44) wirkenden Kraft oder eine Messung eines Einsinkens oder einer Verformung jedes Bodenkontaktelements (41, 42, 43, 44) umfasst.

14. Verfahren nach einem der Ansprüche 1 bis 13,
**dadurch gekennzeichnet, dass**, wenn das Landegestell (40) mindestens drei jeweils mit einem Bodenkontaktelement (41, 42, 43) versehene Radlandeeinrichtungen umfasst, jedes Bodenkontaktelement (41, 42, 43) mindestens ein Rad (51, 52, 53) und mindestens ein Verbindungselement (45, 46, 47) umfasst, das das mindestens eine Rad (51, 52, 53) mit dem Rumpf (4) verbindet, dass wenn das Fahrwerk (40) mindestens drei jeweils mit einem Bodenkontaktelement (41, 52, 53) versehene Skilandeeinrichtungen umfasst, jedes Bodenkontaktelement (41, 42, 43) mindestens einen Ski und mindestens ein Verbindungselement umfasst, das den mindestens einen Ski mit dem Rumpf (4) verbindet, und wenn das Landegestell (40) zwei Kufenlandeeinrichtungen (48, 49) jeweils mit zwei Bodenkontaktelementen (41, 42, 43, 44) umfasst, jedes Bodenkontaktelement (41, 42, 43) mindestens einen Teil einer Kufe und ein Verbindungselement umfasst, das die Kufe mit dem Rumpf (4) verbindet.

15. Verfahren nach einem der Ansprüche 1 bis 14,
**dadurch gekennzeichnet, dass** die mindestens eine den Anstellwinkel der Blätter (21, 31) jedes Rotors (2, 3) betreffende Information eine direkte Messung der Anstellwinkel der Blätter (21, 31) an jedem Rotor (2, 3) umfasst, wobei, wenn während der Landephase eine Steuerunterstützungsregel zur automatischen Stabilisierung des Drehflügelflugzeugs (1) dynamisch auf den Anstellwinkel der Blätter (21, 31) jedes Rotors (2, 3) wirkt, ein Beitrag der Steuerunterstützungsregel zur automatischen Stabilisierung auf die Anstellwinkel der Blätter (21, 31) jedes Rotors (2, 3) von den gemessenen Informationen über die Anstellwinkel der Blätter (21, 31) jedes Rotors (2, 3) abgezogen wird.

16. Verfahren nach einem der Ansprüche 1 bis 15,
**dadurch gekennzeichnet, dass**, wenn ein Pilot des Drehflügelflugzeugs (1) einen Steuerknüppel (22) für den kollektiven Anstellwinkel der Blätter (21) jedes Auftriebsrotors (2) in Richtung einer Position mit vollem kleinen Anstellwinkel senkt, eine Phase der Neuzentrierung der Anstellwinkel der Blätter (21, 31) jedes Rotors (2, 3) zu einer zentrierten Position durchgeführt wird, sobald die den kollektiven Anstellwinkel der Blätter (21) jedes Auftriebsrotors (2) betreffende Information kleiner als ein Nachzentrierungsschwellenwert ist und die die auf jedes Bodenkontaktelement (41, 42, 43, 44) einwirkenden Kräfte betreffende Information größer als ein tatsächlicher Landeschwellenwert ist, der anzeigt, dass sich das Drehflügelflugzeug (1) am Boden befindet.

17. Verfahren nach Anspruch 16,
**dadurch gekennzeichnet, dass** wenn die bei einer Landung gemessene, den kollektiven Anstellwinkel der Blätter (21) jedes Auftriebsrotors (2) betreffende Information kleiner als ein Nachzentrierungsschwellenwert ist, nachdem die Nachzentrierungsphase durchgeführt wurde, und anschließend die Information über den kollektiven Anstellwinkel der Blätter (21) jedes Auftriebsrotors (2) zunimmt, ohne unter einem Abhebeschwellenwert gelegen zu haben, der Schritt des automatischen Steuerns der Anstellwinkel der Blätter (21, 31) jedes Rotors (2, 3) wie bei einem Abheben durchgeführt wird, sobald die gemessene, den kollektiven Anstellwinkel der Blätter (21) jedes Auftriebsrotors (2) betreffende Information größer als ein spezifischer Schwellenwert ist.

18. Verfahren nach einem der Ansprüche 1 bis 17,
**dadurch gekennzeichnet, dass** wenn bei einem Abheben die den kollektiven Anstellwinkel der Blätter (21) jedes Auftriebsrotors (2) betreffende Information oberhalb eines Abhebeschwellenwerts gemessen wird und dann abnimmt, ohne oberhalb eines Neuzentrierungsschwellenwerts gelegen zu haben, der höher als der Abhebeschwellenwert ist, eine Phase der Neuzentrierung jedes Rotors in eine zentrierte Position durchgeführt wird, wenn die den kollektiven Anstellwinkel der Blätter (21) jedes Auftriebsrotors (2) betreffende Information unterhalb eines Grenzschwellenwerts gemessen wird.

19. Verfahren nach einem der Ansprüche 1 bis 18,
**dadurch gekennzeichnet, dass** bei dem Schritt des automatischen Steuerns der Anstellwinkel der Blätter (21, 31) jedes Rotors (2, 3) jede Handlung eines Piloten an einer Vorrichtung zum Steuern des zyklischen Anstellwinkels der Blätter (21) jedes Auftriebsrotors (2) und/oder des Anstellwinkels der Blätter (31) eines Hilfsrotors (3), die zu dem Zeitpunkt ausgeführt wird, an dem der Schritt des automatischen Steuerns stattfindet, von einer vollständigen Steuerung nach einer Steuerregel des Drehflügelflugzeugs (1) abgezogen wird, wobei die vollständige Steuerung nach der Steuerregel gebildet wird durch den Schritt des automatischen Steuerns der Anstellwinkel der Blätter (21, 31) jedes Rotors (2, 3) während einer Abhebephase des Drehflügelflugzeugs (1) oder durch eine Phase des Neuzentrierens der Anstellwinkel der Blätter (21, 31) jedes Rotors (2, 3) während einer Landephase des Drehflügelflugzeugs (1).

20. Verfahren nach einem der Ansprüche 1 bis 19,
**dadurch gekennzeichnet, dass** während des Schritts des automatischen Steuerns der Anstellwinkel der Blätter (21, 31) jedes Rotors (2, 3) jede Handlung eines Piloten an einer Vorrichtung zum Steuern des zyklischen Anstellwinkels der Blätter (21) jedes Auftriebsrotors (2) und/oder des Anstellwinkels der Blätter (31) eines Hilfsrotors (3), die nach der Anwendung des Schritts des automatischen Steuerns stattfindet, zu einer vollständigen Steuerung des Anstellwinkels des Schritts des automatischen Steuerns der Anstellwinkel der Blätter (21, 31) jedes Rotors (2, 3) addiert werden, wobei die vollständige Steuerung nach der Steuerregel gebildet wird durch den Schritt des automatischen Steuerns der Anstellwinkels der Blätter (21, 31) jedes Rotors (2, 3) während einer Abhebephase des Drehflügelflugzeugs (1) oder durch eine Phase des Neuzentrierens der Anstellwinkel der Blätter (21, 31) jedes Rotors (2, 3) während einer Landephase des Drehflügelflugzeugs (1).

21. Verfahren nach einem der Ansprüche 1 bis 20,
**dadurch gekennzeichnet, dass** das Verfahren einen Schritt des Speicherns der mindestens einen den Anstellwinkel der Blätter (21, 31) des mindestens einen Rotors (2, 3) betreffenden Information umfasst.

22. Verfahren nach einem der Ansprüche 1 bis 21,
**dadurch gekennzeichnet, dass** für ein Abheben, das nach Durchführung eines Rollvorgangs am Boden nach einer Landung auf einem Hang mit einer Neigung von weniger als oder gleich 3° mit den kollektiven Anstellwinkel der Blätter (21) jedes Auftriebsrotors (2) betreffenden Information, die kleiner als ein Abhebeschwellenwert ist, durchgeführt wird, als Ersatz für die bei der Landung durchgeführten Messungen der Schritt des automatischen Steuerns der Anstellwinkel der Blätter (21, 31) jedes Rotors (2, 3) in Richtung einer vorgegebenen Position der Blätter (21, 31) jedes Rotors (2, 3) erfolgt, wobei die vorgegebene Position der Blätter (21,31) jedes Rotors (2,3) einem Gleichgewicht des Drehflügelflugzeugs (1) im Schwebeflug, bei Windstille und mit einer vorgegebenen Masse des Drehflügelflugzeugs (1) mit einer vorgegebenen Massenzentrierung entspricht.

23. Verfahren nach einem der Ansprüche 1 bis 22,
**dadurch gekennzeichnet, dass** das Drehflügelflugzeug (1) mindestens einen Auftriebsrotor (2) und mindestens einen Hilfsrotor (3) aufweist, und dass bei dem Schritt des automatischen Steuerns der Anstellwinkel der Blätter (21, 31) des mindestens einen Rotors (2, 3) ein Pilot des Drehflügelflugzeugs (1) den kollektiven Anstellwinkel der Blätter (21) des mindestens einen Auftriebsrotors (2) steuert, während der zyklische Anstellwinkel der Blätter (21) des mindestens einen Auftriebsrotors (2) und der Anstellwinkel der Blätter (31) mindestens eines Hilfsrotors (3) automatisch gesteuert werden.

24. Verfahren nach einem der Ansprüche 1 bis 23,
**dadurch gekennzeichnet, dass** das Verfahren einen automatischen Abhebeschritt umfasst, der durch Anlegen eines zunehmenden Sollwerts an die kollektive Blattsteigung der Blätter (21) jedes Auftriebsrotors (2) durchgeführt wird, wobei der Schritt des automatischen Steuerns der Anstellwinkel der Blätter (21, 31) jedes Rotors (2, 3) gleichzeitig durchgeführt wird.

25. Verfahren nach einem der Ansprüche 1 bis 24,
**dadurch gekennzeichnet, dass** das Verfahren einen automatischen Abhebeschritt umfasst, der durchgeführt wird, indem nacheinander und in umgekehrter Reihenfolge automatische Steuerungen der Anstellwinkel der Blätter (21, 31) jedes Rotors (2, 3) in Abhängigkeit von den während der Landephase durchgeführten Messungen der Anstellwinkel der Blätter (21, 31) jedes Rotors (2, 3) angewendet werden.

26. System (60) zur Unterstützung des Abhebens eines Drehflügelflugzeugs (1) an einem Hang, wobei das Drehflügelflugzeug (1) einen Rumpf (4) sowie mindestens einen Rotor (2, 3) umfasst, der mit einer Mehrzahl von Blättern (21, 31) versehen ist, darunter mindestens ein Auftriebsrotor, wobei das Drehflügelflugzeug (1) Vorrichtungen (22, 23, 32) zum Steuern der Steigungen der Blätter (21, 31) des mindestens einen Rotors (2, 3) umfasst, wobei das Drehflügelflugzeug (1) ein Landegestell (40) mit mindestens drei Bodenkontaktelementen (41, 42, 43, 44) umfasst, die jeweils durch ein Verbindungselement (45, 46, 47; 56, 57, 58, 59) mit dem Rumpf (4) verbunden sind, wobei das System zur Unterstützung des Abhebens eines Drehflügelflugzeugs (1) mindestens einen Rechner (10) umfasst, wobei das System zur Unterstützung des Abhebens eines Drehflügelflugzeugs (1) mindestens eine Vorrichtung (61-64) zur Messung mindestens einer Information betreffend die Kräfte umfasst, die auf jedes Bodenkontaktelement (41, 42, 43, 44) des Landegestells (40) einwirken, wobei das System zur Unterstützung des Abhebens eines Drehflügelflugzeugs (1) mindestens eine Vorrichtung (66-68) zum Messen von mindestens einer die Steigungen der Blätter (21, 31) des mindestens einen Rotors (2, 3) betreffenden Information umfasst,
**dadurch gekennzeichnet, dass** das System (60) zur Unterstützung des Abhebens konfiguriert ist, das Verfahren nach einem der Ansprüche 1 bis 25 durchzuführen.

27. Drehflügelflugzeug (1) mit:
- einem Rumpf (4),
- mindestens einem Rotor (2, 3) mit einer Mehrzahl von Blättern (21, 31), darunter mindestens einem Auftriebsrotor,
- Vorrichtungen (22, 23, 32) zum Steuern der Steigungen der Blätter (21, 31) des mindestens einen Rotors (2, 3),
- einem Landegestell (40), das mit mindestens drei Bodenkontaktelementen (41, 42, 43, 44) versehen ist, die jeweils über ein Verbindungselement (45, 46, 47; 56, 57, 58, 59) mit dem Rumpf (4) verbunden sind, und
- einem System (60) zur Unterstützung des Abhebens eines Drehflügelflugzeugs (1) an einem Hang,
**dadurch gekennzeichnet, dass** das System zur Unterstützung des Abhebens nach Anspruch 26 ist.

## Claims

1. Method for assisting the take-off of a rotorcraft (1), said rotorcraft (1) comprising:
- a fuselage (4),
- at least one rotor (2, 3) provided with a plurality of blades (21, 31), including at least one lift rotor (2),
- control devices (22, 23, 32) for controlling the pitches of said blades (21, 31) of said at least one rotor (2, 3), and
- a landing gear (40) provided with at least three ground contact members (41, 42, 43, 44), each being connected to said fuselage (4) by a connecting member (45, 46, 47; 56, 57, 58, 59),
**characterised in that** said method comprises the following steps:
- measuring at least one piece of information relating to the forces to which each ground contact member (41, 42, 43, 44) is subjected during a landing phase,
- measuring at least one piece of information relating to said pitches of said blades (21, 31) of said at least one rotor (2, 3) during said landing phase of said rotorcraft (1), and
- automatically controlling said pitches of said blades (21, 31) of said at least one rotor (2, 3) during said take-off phase of said rotorcraft (1) following said landing as a function of said measurements taken during said landing.

2. Method according to claim 1,
**characterised in that** said at least one piece of information relating to said pitches of said blades (21, 31) of said at least one rotor (2, 3) comprises a measurement of the position of at least one control device (22, 32) for controlling said pitches of said blades (21, 31) of said at least one rotor (2, 3) or else a direct measurement of said pitches of said blades (21, 31) of said at least one rotor (2, 3) at the level of said at least one rotor (2, 3).

3. Method according to either claim 1 or claim 2,
**characterised in that**, when said rotorcraft (1) comprises at least three lift rotors (2) of which the pitch of said blades (21) is only collectively variable, said at least one piece of information relating to said pitches of said blades (21, 31) of said at least one rotor (2, 3) comprises the collective pitch of said blades (21) of each lift rotor (2) and/or a speed of rotation of each lift rotor (2) and/or the orientation of control surfaces arranged in the airflow sweeping over at least one lift rotor (2).

4. Method according to either claim 1 or claim 2,
**characterised in that**, when said rotorcraft (1) comprises at least one lift rotor (2) of which the pitch of said blades (21) is collectively and cyclically variable, said at least one piece of information relating to said pitches of said blades (21, 31) of said at least one rotor (2, 3) comprises the collective pitch and the cyclic pitch of said blades (21) of each lift rotor (2).

5. Method according to any of claims 1 to 4,
**characterised in that**, when said rotorcraft (1) comprises at least one auxiliary rotor (3) of which the pitch of said blades (31) is only collectively variable, said at least one piece of information relating to said pitches of said blades (21, 31) of said at least one rotor (2, 3) comprises the collective pitch of said blades (31) of each auxiliary rotor (3).

6. Method according to any of claims 1 to 5,
**characterised in that** said step of measuring said at least one piece of information relating to said pitches of said blades (21, 31) is carried out continuously or in a sampled manner during said landing phase, each measurement of said at least one piece of information relating to said pitches of said blades (21, 31) being associated with said measurements of said at least one piece of information relating to said forces to which each ground contact member (41, 42, 43, 44) is subjected.

7. Method according to any of claims 1 to 6,
**characterised in that** said step of automatically controlling said pitches of said blades (21, 31) of said at least one rotor (2, 3) is carried out using said at least one piece of information relating to said pitches of said blades (21, 31) of said at least one rotor (2, 3) measured at an opportune moment during said landing phase, said opportune moment being reached either when a single ground contact member (41, 42, 43, 44) is in contact with the ground and a significant increase in a force exerted on said ground contact member (41, 42, 43, 44) in contact with the ground is detected, or when two ground contact members (41, 42, 43, 44) contacting the ground is detected.

8. Method according to any of claims 1 to 7,
**characterised in that** said step of measuring said at least one piece of information relating to said pitches of said blades (21, 31) is carried out either when a single ground contact member (41, 42, 43, 44) is in contact with the ground and a significant increase in a force exerted on said ground contact member (41, 42, 43, 44) in contact with the ground is detected, or when two ground contact members (41, 42, 43, 44) contacting the ground is detected.

9. Method according to either claim 7 or claim 8,
**characterised in that** only one ground contact member is in contact with the ground and a significant increase in a force on said ground contact member (41, 42, 43, 44) in contact with the ground is detected when a piece of information relating to the forces to which a ground contact member (41, 42, 43, 44) is subjected is greater than a penetration threshold and pieces of information relating to the forces to which said other ground contact members (41, 42, 43, 44) are subjected are less than a non-contact threshold, said non-contact threshold being below said penetration threshold.

10. Method according to either claim 7 or claim 8,
**characterised in that** two ground contact members (41, 42, 43, 44) contacting the ground is detected when pieces of information relating to the forces to which two ground contact members (41, 42, 43, 44) are subjected are greater than a contact threshold and a piece of information relating to the forces to which said at least one other ground contact member (41, 42, 43, 44) is subjected is less than a non-contact threshold, said non-contact threshold being below said contact threshold.

11. Method according to any of claims 1 to 10,
**characterised in that** said step of automatically controlling said pitches of said blades (21, 31) of said at least one rotor (2, 3) for a take-off phase of said rotorcraft (1) is carried out as soon as the start of said phase of said take-off of said rotorcraft (1) is detected.

12. Method according to claim 11,
**characterised in that** the start of said phase of said take-off is detected as soon as at least one piece of information relating to said collective pitch of said blades (21) of said at least one lift rotor (2) is greater than a take-off threshold.

13. Method according to any of claims 1 to 12,
**characterised in that** said step of measuring at least one piece of information relating to the forces to which each ground contact member (41, 42, 43, 44) of said landing gear (40) is subjected during said landing phase comprises a measurement of a force to which each ground contact member (41, 42, 43, 44) is subjected or else a measurement of a penetration or deformation of each ground contact member (41, 42, 43, 44).

14. Method according to any of claims 1 to 13,
**characterised in that**, when said landing gear (40) comprises at least three wheeled landing gear units each provided with a ground contact member (41, 42, 43), each ground contact member (41, 42, 43) comprises at least one wheel (51, 52, 53) and at least one connecting member (45, 46, 47) which connects said at least one wheel (51, 52, 53) to said fuselage (4), when said landing gear (40) comprises at least three ski landing gear units each provided with a ground contact member (41, 42, 43), each ground contact member (41, 42, 43) comprises at least one ski and at least one connecting member which connects said at least one ski to said fuselage (4), and, when said landing gear (40) comprises two skid landing gear units (48, 49) each provided with two ground contact members (41, 42, 43, 44), each ground contact member (41, 42, 43, 44) comprises part of a skid (54, 55) and a connecting member (56, 57, 58, 59) which connects said skid (54, 55) to said fuselage (4).

15. Method according to any of claims 1 to 14,
**characterised in that**, if said at least one piece of information relating to said pitches of said blades (21, 31) of each rotor (2, 3) comprises a direct measurement of said pitches of said blades (21, 31) at the level of each rotor (2, 3) during said landing phase, when a piloting assistance law for automatically stabilising said rotorcraft (1) acts dynamically on the pitch of said blades (21, 31) of each rotor (2, 3), a contribution from said piloting assistance law for automatic stabilisation on said pitches of said blades (21, 31) of each rotor (2, 3) is subtracted from said piece of information relating to said pitches of said blades (21, 31) of each rotor (2, 3) measured.

16. Method according to any of claims 1 to 15,
**characterised in that**, when a pilot of said rotorcraft (1) lowers a stick (22) for controlling the collective pitch of said blades (21) of each lift rotor (2) towards a full fine pitch position, a phase of re-centring said pitches of said blades (21, 31) of each rotor (2, 3) towards a centred position is carried out as soon as said piece of information relating to said collective pitch of said blades (21) of each lift rotor (2) is below a re-centring threshold and as soon as said piece of information relating to the forces to which each ground contact member (41, 42, 43, 44) is subjected is above an effective landing threshold representing that said rotorcraft (1) is on the ground.

17. Method according to claim 16,
**characterised in that**, during landing, if said piece of information relating to the collective pitch of said blades (21) of each lift rotor (2) is measured less than a re-centring threshold with said re-centring phase having been carried out, and then if said piece of information relating to the collective pitch of said blades (21) of each lift rotor (2) increases without having been less than a take-off threshold, said step of automatically controlling said pitches of said blades (21, 31) of each rotor (2, 3) is carried out as for a take-off as soon as said piece of information relating to the collective pitch of said blades (21) of each lift rotor (2) is measured greater than a specific threshold.

18. Method according to any of claims 1 to 17,
**characterised in that**, during take-off, if said piece of information relating to the collective pitch of said blades (21) of each lift rotor (2) is measured greater than a take-off threshold, and is then reduced without having been greater than a re-centring threshold greater than said take-off threshold, a phase of re-centring each rotor towards a centred position is carried out when the piece of information relating to the collective pitch of said blades (21) of each lift rotor (2) is measured as being less than a limit threshold.

19. Method according to any of claims 1 to 18,
**characterised in that**, during said step of automatically controlling said pitches of said blades (21, 31) of each rotor (2, 3), any action by a pilot on a control device for controlling the cyclic pitch of the blades (21) of each lift rotor (2) and/or the pitch of the blades (31) of an auxiliary rotor (3) carried out when said automatic control step takes place is subtracted from full control of a law for piloting said rotorcraft (1), said full control of said piloting law being constituted by said step of automatically controlling said pitches of said blades (21, 31) of each rotor (2, 3) during a take-off phase of said rotorcraft (1) or by a phase of re-centring said pitches of said blades (21, 31) of each rotor (2, 3) during a landing phase of said rotorcraft (1).

20. Method according to any of claims 1 to 19,
**characterised in that**, during said step of automatically controlling said pitches of said blades (21, 31) of each rotor (2, 3), any action by a pilot on a control device for controlling the cyclic pitch of the blades (21) of each lift rotor (2) and/or the pitch of the blades (31) of an auxiliary rotor (3) carried out after the application of said automatic control step adds up to full control of said automatic control step of said pitches of said blades (21, 31) of each rotor (2, 3), said full control of said piloting law being constituted by said step of automatically controlling said pitches of said blades (21, 31) of each rotor (2, 3) during a take-off phase of said rotorcraft (1) or by a phase of re-centring said pitches of said blades (21, 31) of each rotor (2, 3) during a landing phase of said rotorcraft (1).

21. Method according to any of claims 1 to 20,
**characterised in that** said method comprises a step of storing said at least one piece of information relating to said pitches of said blades (21, 31) of said at least one rotor (2, 3).

22. Method according to any of claims 1 to 21,
**characterised in that**, for take-off carried out after a taxiing operation has been carried out on the ground after landing on a slope with an inclination of less than or equal to 3°, using a piece of information relating to the collective pitch of the said blades (21) of each lift rotor (2) less than a take-off threshold, said step of automatically controlling said pitches of said blades (21, 31) of each rotor (2, 3) is carried out towards a predetermined position of said blades (21, 31) of each rotor (2, 3) by replacing said measurements taken during said landing, said predetermined position of said blades (21, 31) of each rotor (2, 3) corresponding to a balance of said rotorcraft (1) in stationary flight, without wind and with a predetermined mass of said rotorcraft (1) with a centring of the predetermined masses.

23. Method according to any of claims 1 to 22,
**characterised in that**, if said rotorcraft (1) comprises at least one lift rotor (2) and at least one auxiliary rotor (3), during said step of automatically controlling said pitches of said blades (21, 31) of said at least one rotor (2, 3), a pilot of said rotorcraft (1) controls the collective pitch of said blades (21) of said at least one lift rotor (2), the cyclic pitch of said blades (21) of said at least one lift rotor (2) and the pitch of said blades (31) of at least one auxiliary rotor (3) being controlled automatically.

24. Method according to any of claims 1 to 23,
**characterised in that** said method comprises an automatic take-off step carried out by applying an increasing setpoint to the collective pitch of said blades (21) of each lift rotor (2), the step of automatically controlling said pitches of said blades (21, 31) of each rotor (2, 3) being carried out simultaneously.

25. Method according to any of claims 1 to 24,
**characterised in that** said method comprises an automatic take-off step carried out by applying, successively and in reverse order, automatic controls of said pitches of said blades (21, 31) of each rotor (2, 3) as a function of said measurements of said pitches of said blades (21, 31) of each rotor (2, 3) carried out during said landing phase.

26. System (60) for assisting the take-off of a rotorcraft (1) on a slope, said rotorcraft (1) comprising a fuselage (4) as well as at least one rotor (2, 3), provided with a plurality of blades (21, 31), including at least one lift rotor, said rotorcraft (1) comprising control devices (22, 23, 32) for controlling the pitches of said blades (21, 31) of said at least one rotor (2, 3), said rotorcraft (1) comprising a landing gear (40) provided with at least three ground contact members (41, 42, 43, 44), each being connected to said fuselage (4) by a connecting member (45, 46, 47; 56, 57, 58, 59), said system for assisting the take-off of a rotorcraft (1) comprising at least one computer (10), said system for assisting the take-off of a rotorcraft (1) comprising at least one measurement device (61-64) for measuring at least one piece of information relating to the forces to which each ground contact member (41, 42, 43, 44) of said landing gear (40) is subjected, said system for assisting the take-off of a rotorcraft (1) comprising at least one measurement device (66-68) for measuring at least one piece of information relating to said pitches of said blades (21, 31) of said at least one rotor (2, 3), **characterised in that** said take-off assistance system (60) is configured to implement the method according to any of claims 1 to 25.

27. Rotorcraft (1) comprising:
- a fuselage (4),
- at least one rotor (2, 3), including at least one lift rotor, provided with a plurality of blades (21, 31),
- control devices (22, 23, 32) for controlling the pitches of said blades (21, 31) of said at least one rotor (2, 3),
- a landing gear (40) provided with at least three ground contact members (41, 42, 43, 44), each being connected to said fuselage (4) by a connecting member (45, 46, 47; 56, 57, 58, 59), and
- a system (60) for assisting the take-off of a rotorcraft (1) on a slope,
**characterised in that** said take-off assistance system is designed according to claim 26.
